# EUROPEAN PATENT APPLICATION

(11) **EP 4 773 655 A1**
(43) Date of publication of application: **08.07.2026**
(21) Application number: 24864630.9
(22) Date of filing: 10.09.2024
(51) Int. Cl.: H04W 24/02

(54) **ACCESS NETWORK APPARATUS AND COMMUNICATION METHOD**

(30) Priority: 12.09.2023 CN 202311177360
(71) Applicant: HUAWEI TECHNOLOGIES CO., LTD., Shenzhen 518129 (CN)
(72) Inventor: LOU, Chong, Shenzhen, Guangdong 518129 (CN); SUN, Fei, Shenzhen, Guangdong 518129 (CN); ZENG, Qinghai, Shenzhen, Guangdong 518129 (CN); TANG, Zhenfei, Shenzhen, Guangdong 518129 (CN); ZHOU, Guohua, Shenzhen, Guangdong 518129 (CN)
(74) Representative: Goddar, Heinz J.
(86) International application number: PCT/CN2024/118086
(87) International publication number: WO 2025/055914

(57) **Abstract**

This application provides an access network apparatus and a communication method, and relates to the field of communication technologies. In the access network apparatus, a proxy unit isolates at least one service unit from an external user/device, and the external user/device may access at least one service via the proxy unit. Therefore, when the access network apparatus is upgraded to provide more services, a new service unit may be directly added to the access network apparatus, thereby reducing difficulty in service deployment of an access network device and improving scalability of the access network apparatus.

## Description

### CROSS-REFERENCE TO RELATED APPLICATIONS

This application claims priority to Chinese Patent Application No. 202311177360.4, filed with the China National Intellectual Property Administration on September 12, 2023 and entitled "ACCESS NETWORK APPARATUS AND COMMUNICATION METHOD", which is incorporated herein by reference in its entirety.

### TECHNICAL FIELD

This application relates to the field of communication technologies, and in particular, to an access network apparatus and a communication method.

### BACKGROUND

In a 5th generation (5th generation, 5G) communication system, each access network (access network, AN) apparatus interacts with another core network function in a core network (core network, CN) via an access and mobility management function (access and mobility management function, AMF). In an implementation, the access network apparatus may further include a central unit (central unit, CU) that may also be referred to as an aggregation unit, and a distributed unit (distributed unit, DU). The CU mainly includes a non-real-time radio higher layer protocol stack function, and also supports downward deployment of some core network functions and supports deployment of an edge application service. The DU mainly processes an L1 physical layer function and an L2 (for example, a MAC layer and an RLC layer) function with a real-time performance requirement.

With continuous evolution of standards, the access network apparatus needs to implement more new functions. However, based on a current architecture of the access network apparatus, if a new function is to be added to the access network apparatus, the access network apparatus (in an implementation, for example, the CU and the DU) needs to be comprehensively updated and upgraded, resulting in great difficulty in upgrading a function of the access network apparatus.

### SUMMARY

Embodiments of this application provide an access network apparatus and a communication method, to provide an architecture that is of the access network apparatus and that has high scalability, thereby reducing difficulty in upgrading a function of the access network apparatus.

According to a first aspect, an embodiment of this application provides an access network apparatus. The access network apparatus may also be referred to as a first access network apparatus. The access network apparatus may be one or more access network devices, may be a software module or a hardware module in an access network device, for example, may be an apparatus or a unit in the access network device other than a CU and a DU, or may be a network element or a node in an access network. The access network apparatus includes a proxy unit and at least one service unit capable of communicating with the proxy unit. The proxy unit is an entry for an external user/device (which may also be referred to as an external for short) to access the at least one service unit, and the at least one service unit is configured to provide a service of an access network side. The proxy unit is configured to obtain first data, and output the first data to a first service unit in the at least one service unit, where the first data is obtained from a second access network apparatus, the first data includes data corresponding to a first service, and the first service unit is configured to provide the first service. The first service unit is configured to process the first data to obtain a first result.

It should be understood that the first access network apparatus and the second access network apparatus may be obtained through division based on functions. The first access network apparatus is mainly responsible for providing a service, and optionally, may be further configured to obtain a request for requesting the service to be processed. The second access network apparatus is mainly responsible for a communication function, for example, is configured to communicate with a terminal apparatus, another access network apparatus (or access network device), or a core network apparatus (or core network device), and is equivalent to a device that can implement a base station function in a communication network, for example, a gNB. Optionally, the second access network apparatus may be configured to obtain the request for requesting the service to be processed. The first access network apparatus and the second access network apparatus may be integrated into a same device, or may be separately implemented via different devices. The at least one service unit capable of communicating with the proxy unit may be understood as that the at least one service unit has a capability of communicating with the proxy unit, or may be understood as that the at least one service unit supports communication with the proxy unit. However, whether the at least one service unit currently communicates with the proxy unit is not limited, that is, a current communication status of the at least one service unit is not limited. Two different service units in the at least one service unit may be configured to provide different services, and the different services may be specifically services of different types. For example, any two service units in the at least one service unit may be configured to provide services of different types. The service unit may also be referred to as a service function, a service network element, or the like. This is not limited in this embodiment of this application. The first service unit in the at least one service unit may provide a sensing service, a location service, an AI service, or the like. Correspondingly, the first service may also be a sensing service, a location service, an AI service, or the like. The proxy unit is used as the entry for accessing the at least one service unit, which may be understood as that the proxy unit isolates the at least one service unit from the external user/device, and the external user/device may access the at least one service unit via the proxy unit. The external user/device may be an apparatus, a device, a unit, or the like other than the proxy unit and the at least one service unit. For example, the external user/device may include the terminal apparatus, a network element (or unit) in a core network, and the second access network apparatus. "Obtain" may be replaced with "receive", and "output" may be replaced with "send" or "transfer". In this embodiment of this application, two expressions: "obtaining information, where the information is obtained from A" and "obtaining information from A" may be replaced with each other. For example, "obtain the first data, where the first data is obtained from the second access network apparatus" may alternatively be described as "obtain the first data from the second access network apparatus". Similarities are not enumerated below.

In this embodiment of this application, the external user/device (for example, the second access network apparatus) may directly access the at least one service unit via the proxy unit. The external user/device only needs to connect to the proxy unit, but does not need to connect to the at least one service unit. Therefore, when the access network apparatus is upgraded or updated, only a corresponding new service unit needs to be added to the access network apparatus, and another service unit in the access network apparatus, the proxy unit, the external user/device (for example, the second access network apparatus), and the like do not need to be upgraded or updated. In this way, an access network apparatus having an architecture with high scalability is provided, so that difficulty in and costs of upgrading the access network apparatus are reduced. In addition, in this embodiment of this application, the at least one service unit may provide a corresponding service, and a service localization mechanism is provided, so that the access network apparatus may directly provide some localized services for the terminal apparatus without participation of the core network, thereby simplifying a service providing procedure, and improving service processing efficiency.

In a possible implementation, the proxy unit may communicate with the second access network apparatus through a universal first interface, and the first interface may be used for transmission of signaling, data, and/or the like between the proxy unit and the second access network apparatus.

In the foregoing implementation, the first interface is not an interface directed to a specific object, but a universal interface like an application programming interface (application programming interface, API), so that the first interface is easy to be extended and upgraded. In this way, the proxy unit and the second access network apparatus only need interface routing to establish communication between the proxy unit and the second access network apparatus.

In a possible implementation, the first service unit may locally use the first result, or the first service unit may output the first result to the proxy unit.

In a possible implementation, the first service may be triggered in a plurality of manners. For example, an application function unit may trigger the first service. In this case, the proxy unit is further configured to obtain a first request from the application function unit (which may alternatively be described as "obtain a first request, where the first request is obtained from the application function unit"), and output the first request to the second access network apparatus. In addition, after obtaining the first result, the proxy unit may output the first result to the application function unit.

It should be understood that the application function unit may be deployed in a third party or the core network. This is not specifically limited. Optionally, the proxy unit may communicate with the application function unit through the application programming interface. In this embodiment of this application, two expressions: "outputting information to A" and "outputting information, where the information is output to A" may be replaced with each other. For example, "output the first result to the application function unit" may be replaced with "output the first result, where the first result is output to the application function unit". Similarities are not enumerated below.

In the foregoing implementation, the application function unit may directly initiate the first request to the proxy unit, to trigger the access network apparatus and the second access network apparatus to collaboratively provide the first service without participation of the core network, thereby simplifying the service processing procedure.

In a possible implementation, before sending the first request to the second access network apparatus, the proxy unit may obtain first information, where the first information is obtained from the second access network apparatus (which may alternatively be described as "obtain first information from the second access network apparatus"); and determine, based on the first information, the second access network apparatus in at least one access network apparatus. This is equivalent to determining to obtain the first data based on the second access network apparatus. For example, the proxy unit determines that a type of data that the second access network apparatus supports providing includes the data corresponding to the first service. The first information may include type information of the data that the second access network apparatus supports providing. This is equivalent to that the first information represents some or all capabilities of the second access network apparatus.

In the foregoing implementation, the proxy unit may determine, based on the first information from the second access network apparatus, to obtain the first data based on the second access network apparatus. This ensures that the second access network apparatus can subsequently provide the first data, so that the first service can be successfully performed.

In a possible implementation, the proxy unit may be further configured to obtain second information from the first service unit, where the second information is for registering the first service unit and indicates type information and/or function information of a service that the first service unit supports providing, and the service that the first service unit supports providing includes the first service.

In the foregoing implementation, the proxy unit may determine, based on the second information from the first service unit, a type and/or a function of the service that can be provided by the first service unit. By analogy, the proxy unit may determine a capability of each service unit in the at least one service unit, so that the proxy unit can subsequently provide a service unit of the first service, to ensure that the access network apparatus can successfully provide the first service.

In a possible implementation, the second information is further for configuring a second interface for communication between the first service unit and the proxy service; and the proxy unit is further configured to establish communication with the first service unit through the second interface.

In the foregoing implementation, the proxy unit may further configure the interface for communication between the proxy unit and the first service unit by using the second information, so that a manner of communication between the proxy unit and the first service unit is provided.

In a possible implementation, the first service unit is further configured to write information about the first service unit into an interface configuration template, to obtain the second information, where the information about the first service unit includes the type information and/or the function information of the service provided by the first service unit, and the interface configuration template includes common information for configuring an interface for the at least one service unit.

It should be understood that the interface configuration template may be prestored, preconfigured, or predefined in the first service unit, for example, configured in the first service unit according to a protocol, configured in the first service unit manually or through the core network, or configured through negotiation between the proxy unit and the at least one service unit. This is not specifically limited.

In the foregoing implementation, the first service unit may write some information about the first service unit into the interface configuration template, to generate the second information that can be for configuring the second interface, thereby simplifying a manner of configuring the interface for the service unit. In this way, the at least one service unit each may use the interface configuration template to generate corresponding information, and there is no need to configure an interface for each service unit, thereby simplifying a design for the interface between the service unit and the proxy unit. In this way, difficulty in and costs of adding a new service unit to the access network apparatus can also be reduced.

In a possible implementation, the proxy unit is further configured to output third information, where the third information is output to the second access network apparatus, and the third information includes type information and/or function information of a service that the at least one service unit supports providing.

In the foregoing implementation, the second access network apparatus may sense a capability of the proxy unit, so that the second access network apparatus can select an appropriate proxy unit to implement the first service.

In a possible implementation, the access network apparatus and the second access network apparatus may be independent of each other. For example, the access network apparatus is one device, and the second access network apparatus is another device. Alternatively, both the access network apparatus and the second access network apparatus are disposed in a same device. For example, the access network apparatus and the second access network apparatus are two hardware modules or two software modules in the same device, or one of the access network apparatus and the second access network apparatus is a software module in the device and the other of the access network apparatus and the second access network apparatus is a hardware module in the device. This is not limited in this embodiment of this application.

In a possible implementation, the first service is a sensing service, and the first data includes a sensing signal; and the first service unit is specifically configured to process the sensing signal to determine target identification information and/or target detection information, where the first result includes type information and/or location information of the terminal apparatus. The target identification information may be understood as information about a target determined by identifying the sensing signal. The information about the target includes, for example, a type of the target. For example, the type of the target is a pedestrian or the terminal apparatus (for example, a vehicle). The target detection information may be understood as a detection result obtained by detecting the sensing signal. The target detection information includes, for example, location information of the target. For example, the location information of the target may represent a location of the terminal apparatus or a location of an obstacle.

It should be understood that the sensing service may be applied to scenarios such as a smart city, intelligent driving, industrial automation, logistics and supply chain management, agriculture and environment monitoring, health monitoring, and medical care. For example, the sensing service may be specifically applied to the smart city, to sense a low-altitude unmanned aerial vehicle, or sense a pedestrian on a road, for path planning, avoidance, or the like.

In a possible implementation, the first service is a location service, and the first data includes a measurement result of a positioning signal; and the first service unit is specifically configured to process the measurement result of the positioning signal to obtain location information of the terminal apparatus, where the first result includes the location information of the terminal apparatus.

It should be understood that the location service may be applied to scenarios such as marketing and advertising, internet of vehicles and intelligent transportation, logistics and supply chain management, indoor navigation and location services, and object tracking and security.

In a possible implementation, the first service unit is specifically configured to obtain the associated first data and a temporary identifier of the terminal apparatus from a second service unit in the at least one service unit; or an identity management unit in the first service unit determines a temporary identifier of the terminal apparatus based on an identity of the terminal apparatus, where the first result further includes the temporary identifier associated with the location information of the terminal apparatus. The second service unit may also be referred to as an identity management unit.

In the foregoing implementation, the first service unit may need to sense only the temporary identifier of the terminal apparatus, to avoid leakage of the identity of the terminal apparatus and improve data processing security.

In a possible implementation, the first service is an AI service, and the first data includes training data or input data of an AI model; and the first service unit is specifically configured to train or update the AI model based on the training data, where the first result includes a trained AI model or an updated AI model; or input the input data into the AI model to obtain an inference result of the AI model, where the first result includes the inference result of the AI model.

It should be understood that the AI service may be used in air interface signal processing processes such as channel measurement, beam management, and encoding/decoding, or may be used in network procedures such as load balancing, network energy saving, and mobility management.

According to a second aspect, an embodiment of this application provides a communication method. The method may be performed by a first access network apparatus. The first access network apparatus may be one or more access network devices, may be a software module or a hardware module in an access network device, for example, may be an apparatus or a unit in the access network device other than a DU and a CU, or may be considered as a network element, a node, or the like in an access network. For example, the first access network apparatus may be the access network apparatus in the first aspect or any possible implementation, may be a software module or a hardware module in the access network apparatus in the first aspect or any possible implementation, may be an apparatus that can implement a same function as the access network apparatus in the first aspect or any possible implementation, or may be a larger device or system including the access network apparatus in the first aspect or any possible implementation. This is not specifically limited in this embodiment of this application. The method includes: obtaining first data from a second access network apparatus, where the first data includes data corresponding to a first service; and processing the first data to obtain a first result.

In a possible implementation, the method further includes: outputting the first result to the second access network apparatus.

In a possible implementation, the method further includes: obtaining a first request from an application function unit, where the first request is for requesting the first service to be provided; outputting the first request, where the first request is output to the second access network apparatus; and outputting the first result to the application function unit.

In a possible implementation, the method further includes: obtaining first information, where the first information is obtained from the second access network apparatus, and the first information includes type information of data that the second access network apparatus supports providing; and determining, based on the first information, the second access network apparatus in at least one access network apparatus communicating with the first access network apparatus.

In a possible implementation, the first access network apparatus includes a proxy unit and at least one service unit capable of communicating with the proxy unit, the proxy unit is an entry for an external user/device to access the at least one service unit, and the at least one service unit is configured to provide a service of an access network side, where the first data is obtained by the proxy unit from the second access network apparatus. The method further includes: The proxy unit outputs the first data to a first service unit in the at least one service unit, where the first service unit is configured to provide the first service; and the first service unit processes the first data to obtain the first result.

In a possible implementation, the method further includes: outputting the first result to the proxy unit.

In a possible implementation, the method further includes: obtaining second information from the first service unit, where the second information is for registering the first service unit and indicates type information of a service that the first service unit supports providing, and the service provided by the first service unit includes the first service.

In a possible implementation, the second information is further for configuring a second interface for communication between the first service unit and the proxy service. The method further includes: The proxy unit establishes communication with the first service unit through the second interface.

In a possible implementation, the method further includes: The first service unit writes information about the first service unit into an interface configuration template, to obtain the second information, where the information about the first service unit includes the type information and/or function information of the service provided by the first service unit, and the interface configuration template includes common information for configuring an interface for the at least one service unit.

In a possible implementation, the method further includes: outputting third information, where the third information is output to the second access network apparatus, and the third information includes type information and/or function information of a service that the first access network apparatus supports providing.

In a possible implementation, the first service is a sensing service, and the first data includes a sensing signal. The processing the first data to obtain the first result includes: processing the sensing signal to determine target identification information and/or target detection information, where the first result includes the target identification information and/or the target detection information.

In a possible implementation, the first service is a location service, and the first data includes a measurement result of a positioning signal. The processing the first data to obtain the first result includes: processing the measurement result of the positioning signal to obtain location information of a terminal apparatus, where the first result includes the location information of the terminal apparatus.

In a possible implementation, the processing the first data to obtain the first result includes: obtaining the associated first data and a temporary identifier of the terminal apparatus from a second service unit in the at least one service unit; or an identity management unit in the first service unit determines a temporary identifier of the terminal apparatus based on an identity of the terminal apparatus, where the first result further includes the temporary identifier associated with the location information of the terminal apparatus. The second service unit may also be referred to as an identity management unit.

In a possible implementation, the first service is an AI service, and the first data includes training data or input data of an AI model. The processing the first data to obtain the first result includes: training or updating the AI model based on the training data, where the first result includes a trained AI model or an updated AI model; or inputting the input data of the AI model into the AI model to obtain an inference result of the AI model, where the first result includes the inference result of the AI model.

According to a third aspect, an embodiment of this application provides a communication method. The method may be performed by a second access network apparatus. The second access network apparatus may be one or more access network devices, may be a software module or a hardware module in an access network device, or may be considered as a network element, a node, or the like in an access network. For example, the second access network apparatus may be the second access network apparatus in the first aspect or any possible implementation, may be a software module or a hardware module in the second access network apparatus in the first aspect or any possible implementation, may be an apparatus that can implement a same function as the second access network apparatus in the first aspect or any possible implementation, or may be a larger device or system including the second access network apparatus in the first aspect or any possible implementation. This is not specifically limited in this embodiment of this application. The method includes: obtaining a first request, where the first request is for requesting a first service to be provided; and outputting first data to a first access network apparatus, where the first data includes data corresponding to the first service.

In a possible implementation, the method further includes: outputting first information, where the first information is output to the first access network apparatus, and the first information includes type information of data that the second access network apparatus supports providing.

In a possible implementation, the first request is obtained from a terminal apparatus or a mobility management unit. The method further includes: obtaining a first result from the first access network apparatus, where the first result is a processing result of the first data; and outputting the first result to the terminal apparatus or the mobility management unit. The mobility management unit may also be referred to as a mobility management apparatus.

Optionally, the mobility management unit may be triggered by the terminal apparatus to initiate the first request, or may be triggered by an application function unit, another unit in a core network, or the like to initiate the first request. This is not limited in this embodiment of this application. For example, the mobility management unit may alternatively receive, via a network exposure unit, a request that is from the application function unit and that is for providing the first service, to initiate the first request.

In a possible implementation, the first request is received from the terminal apparatus or the mobility management unit. The method further includes: outputting fourth information to the terminal apparatus or the mobility management unit, where the fourth information includes the type information of the data that the second access network apparatus supports providing.

In a possible implementation, the method further includes: obtaining third information from the first access network apparatus, where the third information includes type information and/or function information of a service that the first access network apparatus supports providing, and the fourth information further includes the type information and/or the function information of the service provided by the first access network apparatus.

In the foregoing implementation, the second access network apparatus may output capabilities of the first access network apparatus and the second access network apparatus to the terminal apparatus or the mobility management unit, so that the terminal apparatus or the mobility management unit can select an access network apparatus more accurately. In addition, the terminal apparatus or the mobility management unit may not need to sense the first access network apparatus, but sense the capability that can be provided by the first access network apparatus. Therefore, even if the first access network apparatus is updated, a service triggered by the terminal apparatus, the mobility management unit, or the like is not affected.

In a possible implementation, the second access network apparatus includes a communication unit and a collection unit, and the first request is obtained by the communication unit. The method further includes: The communication unit outputs a second request to the collection unit, a third access network apparatus, or a core network, where the second request is for requesting the data corresponding to the first service; and obtains the first data from the collection unit, the third access network apparatus, or the core network.

In a possible implementation, the method further includes: determining to obtain the data corresponding to the first service from the collection unit, the third access network apparatus, or the core network.

According to a fourth aspect, an embodiment of this application provides a communication method. The method may be performed by a mobility management unit. For example, the mobility management unit is an AMF, or has a same function as the AMF. The method includes: receiving a third request from a terminal device, where the third request is for requesting a first service to be provided; determining to provide the first service via a second access network apparatus; sending a first request to the second access network apparatus, where the first request is for requesting the first service to be provided; and receiving a first result from the second access network apparatus, where the first result is a data processing result corresponding to the first service.

In this embodiment of this application, because both an access network apparatus and a core network can provide corresponding services, after receiving the third request, the mobility management unit may determine whether the access network apparatus or the core network provides the first service. In this way, it can be ensured that the access network apparatus can successfully provide the first service, and an existing procedure in which the core network provides a service can also be compatible.

In a possible implementation, the method further includes: receiving fourth information from the second access network apparatus, where the fourth information includes type information of data that the second access network apparatus supports providing.

According to a fifth aspect, an embodiment of this application provides a communication method. The method may be performed by a terminal apparatus. The method includes: receiving fourth information, where the fourth information includes type information of data that a second access network apparatus supports providing; sending a first request to the second access network apparatus, where the first request is for requesting a first service to be provided; and receiving a first result from the second access network apparatus, where the first result is a processing result of first data.

In this embodiment of this application, the terminal apparatus may directly obtain a capability of the second access network apparatus, and initiate, to the second access network apparatus, the request for providing the first service without participation of a core network, thereby simplifying a service initiation procedure, and improving service providing efficiency.

According to a sixth aspect, an embodiment of this application provides an access network apparatus. The communication apparatus may be the second access network apparatus in the third aspect, may be a software module or a hardware module configured in the second access network apparatus, or may be a larger device including the second access network apparatus. The access network apparatus includes a corresponding means (means) or module configured to perform the third aspect or any possible implementation. For example, the access network apparatus includes a communication unit (which may also be referred to as a communication module). Optionally, the access network apparatus further includes a collection unit (which may also be referred to as a collection module).

For example, the communication unit is configured to obtain a first request, where the first request is for requesting a first service to be provided; and output first data to a first access network apparatus, where the first data includes data corresponding to the first service.

Optionally, the access network apparatus may be further configured to implement the method in any possible implementation of the third aspect. Details are not enumerated herein one by one.

According to a seventh aspect, an embodiment of this application provides a communication apparatus. The communication apparatus may be the mobility management unit in the fourth aspect, or may be a software module or a hardware module configured in the mobility management unit. The communication network apparatus includes a corresponding means (means) or module configured to perform the fourth aspect or any possible implementation. For example, the communication apparatus includes a processing unit (sometimes also referred to as a processing module) and a transceiver unit (sometimes also referred to as a transceiver module).

For example, the transceiver unit is configured to receive a third request from a terminal device, where the third request is for requesting a first service to be provided; the processing unit is configured to determine to provide the first service via a second access network apparatus; the transceiver module is further configured to send a first request to the second access network apparatus, where the first request is for requesting the first service to be provided; and the transceiver module is further configured to receive a first result from the second access network apparatus, where the first result is a data processing result corresponding to the first service.

Optionally, the access network apparatus may be further configured to implement the method in any possible implementation of the fourth aspect. Details are not enumerated herein one by one.

According to an eighth aspect, an embodiment of this application provides a communication apparatus. The communication apparatus may be the terminal apparatus in the fifth aspect, or may be a software module or a hardware module configured in the terminal apparatus. The communication network apparatus includes a corresponding means (means) or module configured to perform the fifth aspect or any possible implementation. For example, the communication apparatus includes a processing unit (sometimes also referred to as a processing module) and a transceiver unit (sometimes also referred to as a transceiver module).

For example, the transceiver unit receives fourth information under control of the processing unit, where the fourth information includes type information of data that a second access network apparatus supports providing; sends a first request to the second access network apparatus, where the first request is for requesting a first service to be provided; and receives a first result from the second access network apparatus, where the first result is a processing result of first data.

Optionally, the communication network apparatus may be further configured to implement the method in any possible implementation of the fifth aspect. Details are not enumerated herein one by one.

According to a ninth aspect, an embodiment of this application provides an access network system. The access network system includes the access network apparatus in the first aspect or any possible implementation, and the access network apparatus in the sixth aspect or any possible implementation.

According to a tenth aspect, an embodiment of this application further provides a communication system. The communication system includes the access network apparatus in the first aspect or any possible implementation, and the access network apparatus in the sixth aspect or any possible implementation. Optionally, the communication system further includes the mobility management unit in the seventh aspect or any possible implementation, or further includes the terminal apparatus in the eighth aspect or any possible implementation.

According to an eleventh aspect, an embodiment of this application provides a communication apparatus. The apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the communication method in any one of the first aspect, the third aspect, the fourth aspect, the fifth aspect, and the possible implementations through a logic circuit or by executing code instructions.

In a specific implementation process, the communication apparatus may be a chip, and the processor may be a transistor, a gate circuit, a trigger, various logic circuits, or the like. A specific implementation of the processor is not limited in this embodiment of this application.

In an implementation, the communication apparatus may be a wireless communication device, to be specific, a computer device supporting a wireless communication function. Specifically, the wireless communication device may be a radio access network device like a base station.

In another implementation, the communication apparatus may be a part of devices in the wireless communication device, for example, an integrated circuit product like a system chip or a communication chip. The system chip may also be referred to as a system-on-a-chip (system-on-a-chip, SoC), or referred to as a SoC chip for short. The communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. In a physical implementation, some or all chips of the communication chip may be integrated into the SoC chip. For example, the baseband processing chip is integrated into the SoC chip, but the radio frequency processing chip is not integrated into the SoC chip. The interface circuit may be a radio frequency processing chip in the wireless communication device, and the processor may be a baseband processing chip in the wireless communication device. The interface circuit may be an input/output interface, an interface circuit, an output circuit, an input circuit, a pin, a related circuit, or the like on the chip or a chip system. The processor may alternatively be embodied as a processing circuit or a logic circuit.

According to a twelfth aspect, an embodiment of this application provides a communication apparatus. The apparatus includes a processor and a memory. The memory is configured to store one or more computer programs, the one or more computer programs include computer-executable instructions, and when the communication apparatus runs, the processor executes the one or more computer programs stored in the memory, to cause the communication apparatus to perform the communication method in any one of the first aspect, the third aspect, the fourth aspect, the fifth aspect, and the possible implementations.

Optionally, the communication apparatus further includes other components, such as an antenna, an input/output module, and an interface. Such components may be hardware, software, or a combination of software and hardware.

According to a thirteenth aspect, an embodiment of this application provides a chip system. The chip system includes a processor and an interface. The processor is configured to invoke instructions from the interface and run the instructions. When the processor executes the instructions, the communication method in any one of the second aspect, the third aspect, the fourth aspect, the fifth aspect, and the possible implementations is implemented.

According to a fourteenth aspect, an embodiment of this application provides a computer-readable storage medium. The computer-readable storage medium is configured to store a computer program or instructions. When the computer program or the instructions are run, the communication method in any one of the second aspect, the third aspect, the fourth aspect, the fifth aspect, and the possible implementations is implemented.

According to a fifteenth aspect, an embodiment of this application provides a computer program product including instructions. When the computer program product runs on a computer, the communication method in any one of the second aspect, the third aspect, the fourth aspect, the fifth aspect, and the possible implementations is implemented.

For beneficial effects of any one of the technical solutions in the second aspect to the fifteenth aspect, refer to the beneficial effects of the corresponding technical solution in the first aspect. Repeated content is not enumerated herein again.

### BRIEF DESCRIPTION OF DRAWINGS

FIG. 1 is a diagram of an architecture of an access network apparatus;
FIG. 2 is a diagram of an architecture of a communication system according to an embodiment of this application;
FIG. 3 is a diagram of deployment of an access network apparatus according to an embodiment of this application;
FIG. 4 is a diagram of deployment of still another access network apparatus according to an embodiment of this application;
FIG. 5 is a diagram of an architecture of still another communication system according to an embodiment of this application;
FIG. 6 is a diagram of a communication method according to an embodiment of this application;
FIG. 7 is a diagram of another communication method according to an embodiment of this application;
FIG. 8 is a diagram of still another communication method according to an embodiment of this application;
FIG. 9 is a diagram of an architecture of an access network apparatus according to an embodiment of this application;
FIG. 10 is a diagram of an architecture of another access network apparatus according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

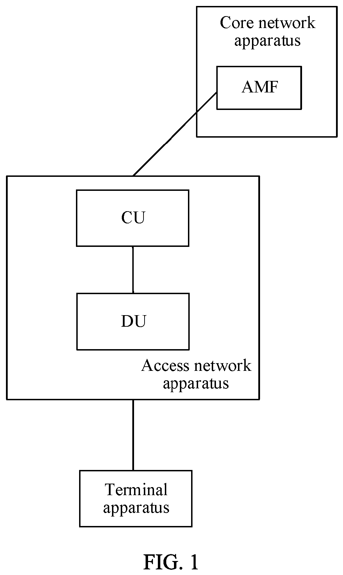

The following describes an architecture of an access network apparatus in the background. FIG. 1 is a diagram of an architecture of an access network apparatus. FIG. 1 shows a terminal apparatus, an access network apparatus in an access network, and a core network (core network, CN) apparatus. The terminal apparatus may access the core network apparatus in a core network via the access network apparatus, and the access network apparatus may communicate with another apparatus in the core network via an access and mobility management function (access and mobility management function, AMF) in the core network apparatus. As shown in FIG. 1, the access network apparatus includes at least one CU and at least one DU. If a new function is to be added to the access network apparatus, the CU and the DU need to be comprehensively updated, so that the access network apparatus can implement the new function and connect to the terminal apparatus and the core network apparatus. It can be learned that the architecture of the access network apparatus has poor scalability, resulting in great difficulty in upgrading a function of the access network apparatus.

In view of this, an embodiment of this application provides an access network apparatus. The access network apparatus (for example, a first access network apparatus) includes a proxy unit and at least one service unit that supports communication with the proxy unit. The proxy unit is an entry for accessing the access network apparatus, and the at least one service unit may provide a corresponding service under an indication of the proxy unit. The access network apparatus isolates a communication function from a service function (for example, a service function), the communication function is carried by a second access network apparatus, and the service function is integrated into a second access network apparatus (which may be considered as a service-oriented function node) other than the second access network apparatus, to isolate a new function/feature from the communication function, and meet requirements for fast rollout/update of the new function and a localized service of the access network apparatus. For example, if a new function needs to be added to the access network apparatus, a service unit configured to implement the new function may be added to the access network apparatus, to reduce difficulty in upgrading a function of the access network apparatus. In this way, an architecture of the access network apparatus has high scalability.

The access network apparatus provided in this embodiment of this application may be an access network device, may be a software module or a hardware module (for example, a chip) in an access network device, or may be an entity, a network element, a node, or the like in an access network. This is not limited in this embodiment of this application. The following describes a possible specific implementation of the access network apparatus.

The access network apparatus may be a device having a communication function. The access network apparatus is, for example, an access network apparatus or a radio access network apparatus. For example, the access network apparatus may be a base station. The access network apparatus in this embodiment of this application is, for example, a radio access network (radio access network, RAN) device (or node) that connects a terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network apparatus in a vehicle-to-everything (vehicle-to-everything, V2X) technology may be a road side unit (road side unit, RSU). A specific technology and a specific device form that are used by a core network device are not limited in this embodiment of this application.

In some deployments, the access network apparatus in this embodiment of this application may be a device including a CU or a DU, a device including a CU and a DU, or a device including a CU-control plane (central unit-control plane (CU-control plane, CU-CP)) node, a central unit-user plane (CU-user plane, CU-UP) node, and a DU node. For example, the access network apparatus may include a gNB-CU-CP, a gNB-CU-UP, and a gNB-DU.

In some deployments, a plurality of RAN nodes cooperate to assist the terminal device in implementing radio access, and different RAN nodes separately implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces correspond to DUs and RUs with different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, by comparison with the CPRI, a part of downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting the DU and the RU correspond to different categories (categories, Cats) of eCPRIs, for example, eCPRI Cats A, B, C, D, E, and F.

The eCPRI Cat A is used as an example. For downlink transmission, layer mapping is used as a split. The DU is configured to implement layer mapping and one or more previous functions (to be specific, one or more of coding, rate matching, scrambling, modulation, and layer mapping), and another function (for example, one or more of RE mapping, digital beamforming (beamforming, BF), or inverse fast Fourier transform (inverse fast Fourier transform, IFFT)/cyclic prefix (cyclic prefix, CP) addition) after the layer mapping is moved to the RU for implementation. For uplink transmission, RE demapping is used as a split. The DU is configured to implement demapping and one or more previous functions (to be specific, decoding, rate de-matching, descrambling, demodulation, inverse discrete Fourier transform (inverse discrete Fourier transform, IDFT), channel equalization, and RE demapping), and another function (for example, one or more of digital BF or fast Fourier transform (FFT)/CP removal) after the demapping is moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one unit of the CU (or the CU-CP and the CU-UP), the DU, and the RU in this application may be implemented by using a software module, a hardware module, or a combination of a software module and a hardware module.

The access network apparatus provided in this embodiment of this application may be applied to various communication systems (or networks), for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

With reference to the accompanying drawings, the following describes, by using an example, a communication system to which the access network apparatus may be applied.

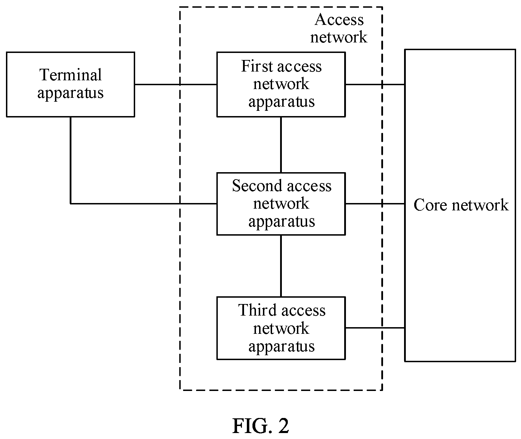

For example, FIG. 2 is a diagram of an architecture of a communication system according to an embodiment of this application, or FIG. 2 may be understood as a diagram of a scenario to which the access network apparatus can be applied. As shown in FIG. 2, the communication system includes at least one terminal apparatus, an access network, and a core network. In FIG. 2, an example in which the access network includes three core network apparatuses: a first access network apparatus, a second access network apparatus, and a third access network apparatus is used for description. The terminal apparatus may separately communicate with the first access network apparatus, the second access network apparatus, and the third access network apparatus. The terminal apparatus may access the core network via the second access network apparatus or the third access network apparatus. The first access network apparatus may provide a service for the terminal apparatus. For example, the first access network apparatus provides the service for the terminal apparatus via the second access network apparatus.

The first access network apparatus and the second access network apparatus may be obtained through division based on functions. The first access network apparatus is mainly responsible for providing the service, and optionally, may be further configured to obtain a request for requesting the service to be processed. The second access network apparatus is mainly responsible for a communication function, for example, is configured to communicate with the terminal apparatus, another access network apparatus (or access network device), or a core network apparatus (or core network device), and is equivalent to a device that can implement a base station function in a communication network, for example, a gNB. Optionally, the second access network apparatus may be configured to obtain the request for requesting the service to be processed.

In FIG. 2, an example in which there is one terminal apparatus is used. Actually, a quantity of terminal apparatuses is not limited. The apparatus in this embodiment of this application may be one or more hardware devices, may be a component in a hardware device, may be a software module in a hardware device, or the like. This is not specifically limited in this embodiment of this application. It may be understood that the terminal apparatus in this embodiment of this application may be replaced with a first network element or a first communication apparatus, the first access network apparatus may be replaced with a second network element or a second communication apparatus, the second access network apparatus may be replaced with a third network element or a third communication apparatus, the third access network apparatus may be replaced with a fourth network element or a fourth communication apparatus, and the like.

In a possible implementation, both the first access network apparatus and the second access network apparatus are disposed in a same device. The device may be, for example, referred to as a first access network device. For example, both the first access network apparatus and the second access network apparatus are hardware modules or software modules in the access network device. Optionally, the third access network apparatus may also be disposed in the first access network device, or the third access network apparatus may be disposed in a second access network device. In another possible implementation, the first access network apparatus, the second access network apparatus, and the third access network apparatus are all disposed independently.

The terminal apparatus is a device having a wireless transceiver function, and may also be referred to as a terminal device, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal apparatus may be a fixed device, a mobile device, a handheld device, a wearing device (which may also be referred to as a wearable device), a vehicle-mounted device, or a wireless apparatus (for example, a communication module or a chip system) built in the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and the like. The terminal apparatus may be sometimes referred to as user equipment (user equipment, UE), a terminal, an access station, a UE station, a remote station, a wireless communication device, user equipment, or the like.

By way of example but not limitation, the wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

Any access network apparatus (for example, the first access network apparatus, the second access network apparatus, or the third access network apparatus) and/or the terminal device may be deployed on the land, including an indoor device, an outdoor device, a handheld device, or a vehicle-mounted device; may be deployed on the water; or may be deployed on an airplane, a balloon, and a satellite in the air. Scenarios in which the access network apparatus and the terminal apparatus are located are not limited in embodiments of this application.

In embodiments of this application, an apparatus configured to implement a function of the terminal apparatus may be a terminal apparatus, or may be an apparatus that can support the terminal apparatus in implementing the function, for example, a chip system, where the apparatus may be installed in the terminal apparatus or used in matching with the terminal apparatus. In embodiments of this application, the chip system may include a chip, or may include a chip and another discrete device. In embodiments of this application, an example in which the apparatus configured to implement the function of the terminal apparatus is the terminal apparatus is merely used for description, and constitutes no limitation on the solutions in embodiments of this application.

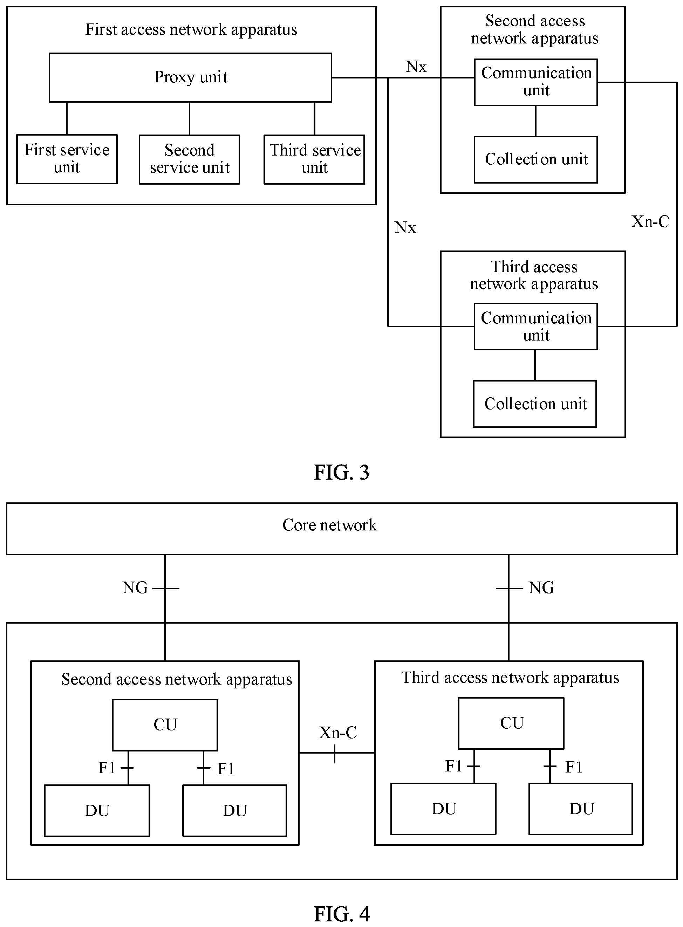

FIG. 3 is a diagram of deployment of an access network apparatus according to an embodiment of this application. FIG. 3 separately shows possible architectures of a first access network apparatus, a second access network apparatus, and a third access network apparatus. The first access network apparatus in FIG. 3 is, for example, the first access network apparatus in FIG. 2, the second access network apparatus is, for example, the second access network apparatus in FIG. 2, and the third access network apparatus is, for example, the third access network apparatus in FIG. 2.

The first access network apparatus includes a proxy (proxy) unit and at least one service unit. The proxy unit may be a hardware module or a software module in the access network apparatus, and the at least one service unit may be a hardware module or a software module in the access network apparatus. This is not specifically limited in this embodiment of this application. In FIG. 3, an example in which there is one proxy unit is used. Actually, there may alternatively be one or more proxy units. In addition, in FIG. 3, an example in which the at least one service unit includes three service units: a first service unit, a second service unit, and a third service unit is used. Actually, a quantity of service units included in the at least one service unit is not limited.

The proxy unit may be considered as an entry for an external user/device to access the at least one service unit. In other words, the external user/device may access the at least one service unit via the proxy unit. Alternatively, it may be described as that the proxy unit is configured to connect to the external user/device, isolate the at least one service unit from the external user/device, and control the external user/device to access the at least one service unit. The external user/device is a unit, an apparatus, a device, or the like other than the proxy unit and the at least one service unit, for example, a terminal apparatus, a core network (for example, an apparatus or a unit in the core network, and specifically, for example, an access and mobility management function (access and mobility management function, AMF) in the core network), a second access network apparatus, or a third party (for example, an apparatus or a unit in the third party, and specifically, for example, an application function (application function, AF)).

Optionally, the proxy unit may be further responsible for registration/authorization/access management of a service unit or signaling forwarding, data packet header addition/modification, service data routing, path update, and storage of context information related to the service unit.

That the proxy unit can communicate (or supports communication) with the at least one service unit may alternatively be described as that the at least one service unit can communicate (or supports communication) with the proxy unit, or may be described as that the proxy unit may correspond to the at least one service unit.

For example, the proxy unit may separately communicate with the first service unit, the second service unit, and the third service unit through a second interface (for example, an Ny interface shown in FIG. 3). The proxy unit may be used as a "backplane" to provide a standard "slot" for the at least one service unit.

When the proxy unit includes a plurality of proxy units, any proxy unit in the plurality of proxy units may communicate with the at least one service unit, or one proxy unit in the plurality of proxy units may communicate with one service unit in the at least one service unit. Specifically, for example, each proxy unit in the plurality of proxy units communicates with one service unit in the at least one service unit. In other words, the plurality of proxy units are in one-to-one correspondence with the at least one service unit.

The at least one service unit may be configured to provide a service of an access network side. The service (or service) of the access network side may be understood as a service that can be provided by an access network, and may be considered as a local service, or may be considered as a native service in the access network. The service of the access network side includes but is not limited to an access (access) service, a sensing (sensing) service, a location service, an artificial intelligence (artificial intelligence, AI) service, and other services that can be provided by the access network in a future evolution process. The service of the access network side may include the following feature 1 and/or feature 2.

Feature 1: There is a requirement for data of the service to be locally closed or within a campus.

For example, when a user in a campus (for example, an industrial campus) uses a location service based on the access network, because positioning information of a device in the campus involves some privacy issues of the device, the user expects positioning data not to enter an operator network, that is, a public network. Therefore, it may be considered that there is a requirement for data of the location service to be within the campus. For another example, when an operator uses a sensing service, a sensing signal collected by the access network (for example, an access network apparatus) may be locally processed in a closed-loop manner, and a processing result may be directly applied to the access network, without being forwarded by devices over a public network. Therefore, it may be considered that there is a requirement for data of the sensing service to be locally closed.

Feature 2: The service has a requirement for real-time sensing of an air interface status or the like of the access network.

For example, for some services, data of a signal source end needs to be flexibly adjusted based on an air interface status of an access network device. For example, when the air interface status indicates congestion or poor signal quality, the signal source end may reduce a requirement of service data generated by the signal source end on air interface transmission by lowering a bit rate, to adaptively perform adjustment and improve user experience quality. Therefore, it may be understood that this type of service has a requirement for real-time sensing of the air interface status of the access network device. For example, the service is an extended reality (extended reality, XR for short) (specifically, for example, virtual reality (virtual reality, VR)) service.

It should be understood that the service of the access network side may include a service that can be provided only by the access network, services that can be respectively provided by the core network and another network (for example, a core network), a service collaboratively provided by the access network and another network (for example, the core network), a service that can be collaboratively provided by the access network and another device (for example, a terminal apparatus), and the like.

When the at least one service unit includes a plurality of service units, the plurality of service units may provide (or implement) at least one type of service. For example, all the plurality of service units may be configured to provide one type of service, or at least two service units in the plurality of service units are configured to provide at least two different types of services. That the at least two service units in the plurality of service units are configured to provide the at least two different types of services includes: Any two service units in the plurality of services are configured to provide two types of services. The following uses the first service unit as an example to describe content of the first service unit. For content of the second service unit and the third service unit, refer to the content of the first service unit.

For example, the first service unit is configured to provide (or implement) a sensing service. In this case, the first service unit may also be referred to as a sensing function (sensing function, SF), a sensing network element, a sensing function unit, a sensing function network element, or the like.

For another example, the first service unit is configured to provide (or implement) a location service, and the first service unit may be configured to provide (or implement) an AI service. In this case, the first service unit may be referred to as a positioning network element, a positioning function unit, a positioning function network element, or a positioning data management unit. In this example, the first service unit may be configured to determine location information of a terminal apparatus.

Optionally, the positioning data management unit includes an identity management unit. The identity management unit is configured to manage identification information of the terminal apparatus. When the positioning data management unit does not include the identity management unit, the at least one service unit may further include an identity management unit. In other words, in this case, the identity management unit and the positioning data management unit may be considered as two service units independent of each other. The identity management unit may be configured to manage the identity information of the terminal apparatus. For example, the positioning data management unit may be considered as an example of the first service unit, and the identity management unit may be considered as an example of the second service unit.

For another example, the first service unit is configured to implement an AI service. In this case, the first service unit may be referred to as an AI network element, an AI function unit, an AI function network element, an AI management unit, or the like. The AI management unit may be configured to perform at least one of the following: training an AI model, updating the AI model, performing inference based on the AI model, or the like.

Optionally, each service unit in the at least one service unit may include one or more instances, and the proxy unit may be configured to select an instance for executing a corresponding service.

The second access network apparatus and the third access network apparatus may access, via the proxy unit, the service provided by the at least one service unit. For example, the second access network apparatus and the third access network apparatus each may communicate with the proxy unit through a first interface (for example, an Nx interface shown in FIG. 3). The first interface may be a universal interface not directed to a specific service unit. In this way, the first interface can be extended and upgraded, to reach an industry consensus, and simplify an interface design. Optionally, the first interface may be used for transmission of signaling and/or data.

In a possible implementation, the second access network apparatus and the third access network apparatus each may include a communication unit and at least one collection unit, and the communication unit may communicate with the at least one collection unit. In FIG. 3, an example in which there is one communication unit and one collection unit is used. Actually, a quantity of communication units and a quantity of collection units are not limited.

The second access network apparatus and the third access network apparatus may also communicate with each other. For example, a communication unit in the second access network apparatus may communicate with a communication unit in the third access network apparatus through an Xn-C interface.

FIG. 4 is a diagram of deployment of an access network apparatus according to an embodiment of this application. FIG. 4 shows a possible implementation of a second access network apparatus and a third access network apparatus. In FIG. 4, an example in which a communication unit is a central unit (central unit, CU) (which may also be referred to as an aggregation unit) and a collection unit is a distributed unit (distributed unit, DU) is used. In other words, the CU may be considered as an implementation of the communication unit in FIG. 3, and the DU may be considered as an implementation of the collection unit in FIG. 3.

A CU in the second access network apparatus may control access to a DU in the second access network apparatus, and a CU in the third access network apparatus may control access to a DU in the third access network apparatus.

In FIG. 4, an example in which the second access network apparatus and the third access network apparatus each include one CU is used. Actually, a quantity of CUs included in the second access network apparatus and a quantity of CUs included in the third access network apparatus are not limited. In addition, in FIG. 4, an example in which the second access network apparatus and the third access network apparatus each include two DUs is used. Actually, a quantity of DUs included in the second access network apparatus and a quantity of DUs included in the third access network apparatus are not limited.

The CU in the second access network apparatus and the DU in the third access network apparatus may communicate with each other through an F1 interface. The second access network apparatus and the third access network apparatus each may communicate with a core network through an NG interface. The second access network apparatus and the third access network apparatus may communicate with each other through an Xn-C interface.

In the implementation shown in FIG. 4, the second access network element apparatus and the third access network apparatus each include a CU and a DU. In this way, the second access network apparatus and the third access network apparatus may reuse an existing architecture of an access network apparatus, to reduce modifications to a device in a network.

The CU in the second access network apparatus is a logical node that may be configured to carry a radio resource control (radio resource control, RRC) layer, a service data adaptation protocol (service data adaptation protocol, SDAP) layer, and a packet data convergence protocol (packet data convergence protocol, PDCP) layer of the second access network apparatus, and is configured to control an operation of one or more DUs. The DU in the second access network apparatus is a logical node that may be configured to carry a radio link control (radio link control, RLC) layer, a medium access control (medium access control, MAC) layer, and a physical (physical, PHY) layer of the second access network apparatus.

When both the first access network apparatus and the second access network apparatus are deployed in a same access network device, optionally, the first access network apparatus may be a unit or an apparatus in the access network device other than a CU and a DU.

For content of the CU in the third access network apparatus, refer to the content of the CU in the second access network apparatus. For content of the DU in the third access network apparatus, refer to the content of the DU in the second access network apparatus. Details are not described herein again.

A proxy unit may be configured to carry data of an adaptation layer. To be specific, the adaptation layer is deployed above protocol stack processing of RRC, SDAP, and PDCP data of the CU, and may be used to process content carried by the CU in a second access network device. In a possible implementation, a direction in which data is output from the CU to the proxy unit is used as an example. After the data is processed by the PDCP layer and the SDAP layer in the CU, first user plane data is obtained. After the user plane data is processed by the adaptation layer, first processed data is obtained. The first processed data is transferred to the proxy unit through an Nx interface. The proxy unit performs restoration on the first processed data, to obtain the first user plane data (that is, user plane data obtained through the processing performed by the PDCP layer and the SDAP layer in the CU). For a direction in which data is output from the proxy unit to the CU, processing performed by the proxy unit in this case is similar to a processing process performed by the proxy unit in the case of the direction in which the data is transmitted from the CU to the proxy unit. Details are not enumerated herein again.

Similarly, an adaptation layer may also be deployed between the service unit and the proxy unit. After data is processed by an adaptation layer in the proxy unit, second processed data is obtained. The second processed data is transferred to an adaptation layer in the service unit through an Ny interface. After the second processed data is processed by the adaptation layer, the service unit obtains, through restoration, data transmitted by the proxy unit (that is, obtains processing that is not processed by the proxy unit).

It should be understood that, in FIG. 4, an example in which the second access network apparatus and the third access network apparatus each include the CU and the DU is used. Actually, implementations of the second access network apparatus and the third access network apparatus are not limited. This is not specifically limited in this embodiment of this application.

In a possible implementation, the CU in the second access network apparatus and the CU in the third access network apparatus each may be further split into a CU-CP and a CU-UP. In this case, the communication unit may include the CU-CP and/or the CU-UP.

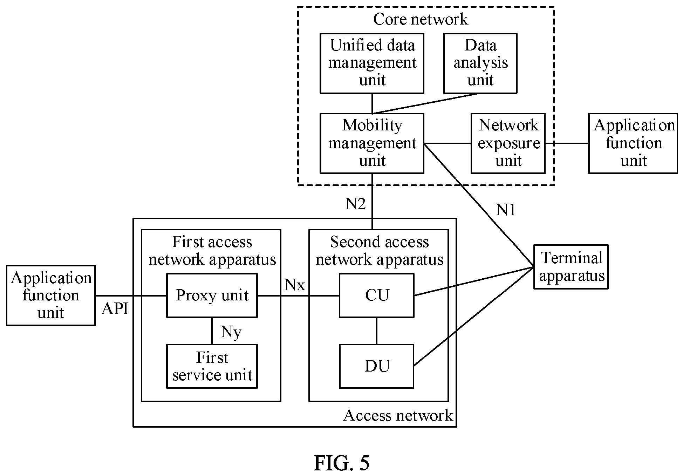

FIG. 5 is a diagram of an architecture of a communication system according to an embodiment of this application, or FIG. 5 may be considered as a diagram of a scenario according to an embodiment of this application. FIG. 5 shows a terminal apparatus, an access network, and a core network. The access network includes a first access network apparatus and a second access network apparatus. For a structure of the first access network apparatus shown in FIG. 5, refer to the architecture of the first access network apparatus in FIG. 3. For a structure of the second access network apparatus, refer to the architecture of the second access network apparatus in FIG. 4.

The core network includes, for example, a mobility management unit, a network exposure unit, a unified data management unit, and a data analysis unit. The mobility management unit may also be referred to as a mobility management apparatus, a mobility management network element, or the like, for example, an AMF. The network exposure unit may also be referred to as a network exposure apparatus or a network exposure network element, for example, a network exposure function (network exposure function, NEF). The unified data management unit may also be referred to as a unified data management apparatus or a unified data management network element, for example, a unified data management (unified data management, UDM). The data analysis unit may also be referred to as a data analysis apparatus, a data analysis network element, or the like, for example, a network data analytics function (network data analytics function, NWDAF). Optionally, the NWDAF may obtain a sensing result of a RAN side via the AMF, to perform network intelligent analysis and prediction.

Optionally, the communication system further shows at least one application function unit, and the at least one application function unit may be deployed in a third party or the core network. The application function unit is, for example, an AF. For example, the AF may initiate, via a proxy unit, a request for processing a local service (or service).

For brevity of description, the following uses an example in which the mobility management unit is the AMF and the application function unit is the AF for description. In other words, the AMF in the following may be replaced with the mobility management unit, and the AF may be replaced with the application function unit.

As shown in FIG. 5, the proxy unit may communicate with the AF through, for example, an application programming interface (application programming interface, API). For example, the first access network apparatus may communicate with the second access network apparatus through an Nx interface. For example, the second access network apparatus may communicate with the AMF through an N2 interface. A CU and a DU in the second access network apparatus each may communicate with a terminal apparatus. The terminal apparatus may further communicate with the AMF through an N1 interface.

The following describes a method provided in embodiments of this application with reference to the accompanying drawings. In the accompanying drawings corresponding to embodiments of this application, all steps represented by dashed lines are optional steps. In embodiments of this application, a terminal apparatus is, for example, the terminal apparatus in FIG. 2 or FIG. 5; a first access network apparatus is, for example, the first access network apparatus in FIG. 2, FIG. 3, or FIG. 5; a first service unit is, for example, the first service unit in FIG. 3 or FIG. 5; a proxy unit is, for example, the proxy unit in FIG. 3 or FIG. 5; a second access network apparatus is, for example, any second access network apparatus in FIG. 2 to FIG. 5; a third access network apparatus is, for example, any third access network apparatus in FIG. 2 to FIG. 4; an AF is, for example, the application function unit in FIG. 5; and an AMF is, for example, the mobility management unit in FIG. 5. If the technical solutions provided in embodiments of this application are applied to another communication system, a name and/or a function of an apparatus may be changed. This is not limited herein.

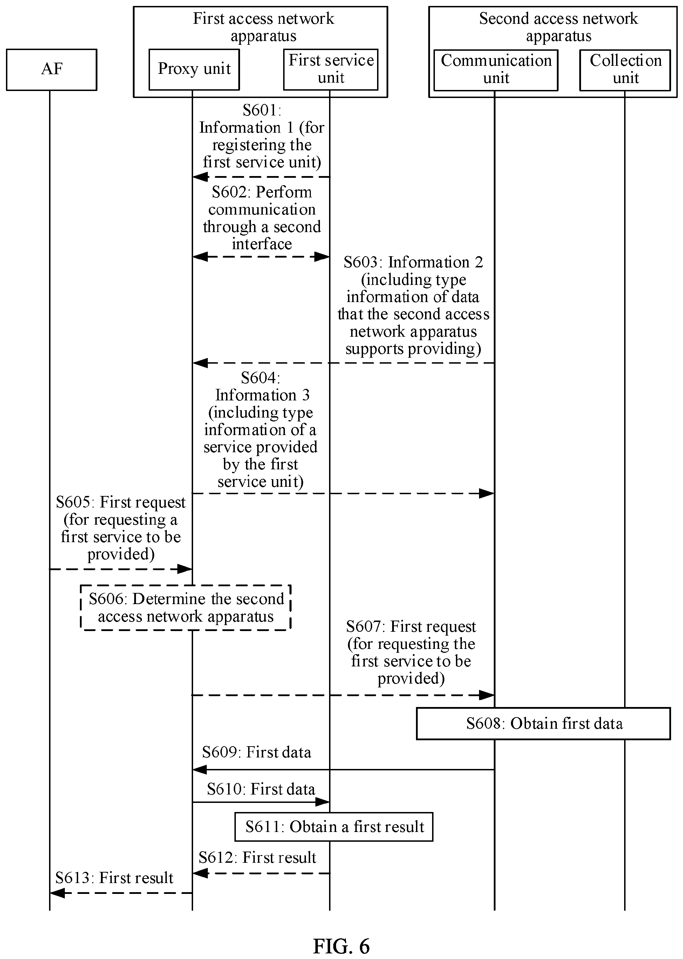

FIG. 6 is a diagram of a communication method according to an embodiment of this application. In FIG. 6, an example in which at least one service unit included in a first access network apparatus includes a first service unit is used for description.

S601: The first service unit in the first access network apparatus outputs information 1 to a proxy unit in the first access network apparatus. Correspondingly, the proxy unit obtains the information 1 from the first service unit. The information 1 may be referred to as second information.

It should be understood that "output" and "obtain" in this embodiment of this application may be two interaction operations between two software modules in one device, may be two interaction operations between two hardware modules in one device, may be two interaction operations between one software module and one hardware module in one device, may be two interaction operations between two devices, may be two interaction operations between one device and a software module in the other device, or may be two interaction operations between one device and a hardware module in the other device. This is not limited in this embodiment of this application. In addition, "output" in this embodiment of this application may be replaced with "send" or "transfer", and "receive" may be replaced with "obtain".

The information 1 may alternatively be referred to as registration (register) information or configuration information, and is for registering the first service unit. The information 1 may indicate or include type information and/or function information of a service provided by the first service unit. For example, the information 1 may include a type identifier and/or a function identifier of the service provided by the first service unit.

A function may be understood as one or more functions in a service implementation process. One service may correspond to one function. For example, a location service corresponds to a positioning function. In this case, a function and a type may be replaced with each other. Alternatively, one service may correspond to a plurality of functions. For example, a sensing service correspondingly includes a sensing data analysis function, a sensing data selection function, and a sensing data processing function. This is not limited in this embodiment of this application. Functions that may correspond to any two different service units may include a same function, or may not include a same function. For example, the two service units each include a recording function. The recording function is that context information of the service unit can be recorded, and an example of the context information of the service unit is as follows. If a service unit has a recording function, a service state of the service unit may be considered as statefull (statefull). If the service unit does not have a recording function, a service state of the service unit may be considered as stateless (stateless).

Optionally, the information 1 may be further for configuring a second interface for communication between the first service unit and the proxy service. In this case, the proxy service may determine, based on the information 1, the second interface for communication between the proxy service and the first service unit, to communicate with the first service unit through the second interface. For content of the second interface, refer to the content of the second interface in FIG. 3.

In a possible implementation, the information 1 may be generated by the first service unit based on an interface configuration template (or referred to as an interface template or a template for short), and the interface configuration template may be preconfigured or predefined in the first service unit.

The interface configuration template includes common information for configuring an interface for the at least one service unit. For example, the interface configuration template may include information about a public function. The information about the public function may be for implementing a common function needed by the interface for the at least one service unit. The interface configuration module may be similar to information predefined at an operating system layer, and different developers may develop applications based on the predefined information. Correspondingly, different service units may also configure, based on the interface configuration template, an interface corresponding to the service units. In this way, there is no need to develop a dedicated interface for each service unit, simplifying an interface design in the access network apparatus.

For example, the first service unit may write (or input or fill) information about the first service unit into the interface configuration template, to obtain interface configuration information of the first service unit. The information about the first service unit may be some information dedicated to the first service unit, for example, the type information and/or the function information of the service provided by the first service unit. The type information and/or the function information of the service provided by the first service unit may identify the first service unit.

Optionally, the information 1 further indicates or includes a service parameter of the first service unit. The service parameter is, for example, a type of data that the first service unit supports processing, and/or a format of data that the first service unit supports transmitting. The service parameter of the first service data unit may be a specific description of a type of the service, for example, an operation performed on the service, for example, creating the service, updating the service, or deleting the service. Optionally, the service parameter further includes a user identifier of a service requester. The user identifier indicates a requester of a service request, and is for completing the operation by a service provider based on the user identifier. For example, if a terminal apparatus initiates a service, the user identifier of the service requester may be an identifier of the terminal apparatus.

S602: The proxy unit in the first access network apparatus communicates with the first service unit in the first access network apparatus through the second interface.

For example, the proxy unit configures the second interface based on the information 1, to communicate with the first service unit through the second interface.

S601 and S602 are a process of establishing communication between the proxy unit and the first service unit provided in this embodiment of this application. Actually, any service unit in the at least one service unit may establish communication with the proxy unit based on the process of S601 and S602. Details are not enumerated herein again. In this way, the proxy unit may obtain type information and/or function information of a service that each service unit in the at least one service unit supports providing.

It should be understood that the proxy unit may alternatively establish communication with the first service unit in a plurality of manners. When the proxy unit establishes communication with the first service unit in another manner, or when the proxy unit has established communication with the first service unit, steps S601 and S602 do not need to be performed. In other words, S601 and S602 are optional steps, and are shown by using dashed lines in FIG. 6.

S603: A second access network apparatus outputs information 2 to the proxy unit in the first access network apparatus. Correspondingly, the proxy unit obtains the information 2 from the second access network apparatus. The information 2 may be referred to as first information. The information 2 includes or indicates type information of data that the second access network apparatus supports providing. The type information of the data in the information 2 is also equivalent to a type of a service supported by the second access network apparatus.

For example, a communication unit in the second access network apparatus may output the information 2 to the proxy unit in the first access network apparatus through a first interface. For the first interface, refer to the content in FIG. 3. The information 2 may be carried in capability (capability) information of the second access network apparatus. A type of the data may be obtained through division based on a type of the service implemented by using the data. For example, if the service includes a sensing service and a location service, the type of the data may correspondingly include sensing data for implementing the sensing service and positioning data for implementing the location service. The type information of the data may be, for example, a type identifier of the data.

Optionally, the information 2 may further include a data providing manner and/or a first area restriction. In this embodiment of this application, the data that the second access network apparatus supports providing includes at least one of data prestored by the second access network apparatus, data that can be collected by the second access network apparatus, or data that can be obtained by the second access network apparatus from another access network apparatus. The data providing manner may be obtained through division based on a data source. For example, the data providing manner includes: An access network apparatus (for example, the second access network apparatus or a third access network apparatus) provides the data, or a core network provides the data. The first area restriction may be an area in which the second access network apparatus supports providing data. An area in which data is provided may be obtained through division by using the second access network apparatus or a tracking area (tracking area, TA) as a granularity. For example, if division is performed based on the second access network apparatus, the first area restriction may indicate specific access network apparatuses whose data can be provided by the second access network apparatus. For example, if the TA is used as the granularity for division, the first area restriction may indicate specific TAs in which the second access network apparatus provides data.

When the information 2 is output by the communication unit in the second access network apparatus to the proxy unit, the type information of the data that the second access network apparatus supports providing may be preconfigured or predefined in the communication unit in the second access network apparatus, or may be obtained from a collection unit in the second access network apparatus. This is not limited in this embodiment of this application.

S604: The proxy unit in the first access network apparatus outputs information 3 to the second access network apparatus. Correspondingly, the second access network obtains the information 3 from the proxy unit. The information 3 may also be referred to as third information. The information 3 may include or indicate type information and/or function information of a service provided by the first access network apparatus (which is also equivalent to type information and/or function information of a service that the at least one service unit supports providing, for example, including the type information of the service provided by the first service unit). The information 3 may be carried in capability information of the first access network apparatus.

For example, the proxy unit may output the information 3 to the communication unit in the second access network apparatus through a first interface. For the first interface, refer to the content in FIG. 3. It should be understood that a process of S603 and S604 may be considered as a process of exchanging capability information between the first access network apparatus and the second access network apparatus. Certainly, the information 2 of the second access network apparatus may alternatively be preconfigured or predefined on the first access network apparatus, and the information 3 of the first access network apparatus may alternatively be preconfigured or predefined on the second access network apparatus. In this case, steps S603 and S604 may not need to be performed. In other words, S603 and S604 are optional steps, and are shown by using dashed lines in FIG. 6.

S605: An AF outputs a first request to the proxy unit in the first access network apparatus. Correspondingly, the proxy unit obtains the first request from the AF. That the AF outputs the first request to the proxy unit may be considered as an example of accessing the proxy unit by an external user/device.

For example, the AF may output the first request to the proxy unit through an API. The first request may also be referred to as a service request, a service request, or the like. The first request is for requesting a first service to be provided. Optionally, the first request includes type information and/or function information of the first service, and the type information and/or the function of the first service may indicate to request the first service to be provided. The first service may be, for example, a sensing service, a location service, an AI service, or the like. Optionally, the first request further includes a key service indicator (key performance indicator, KPI) and/or a target area. The KPI is an indicator corresponding to the first service, for example, at least one requirement like an expected rate, an expected delay, or expected reliability related to providing of the first service. The target area may be, for example, an area in which the AF requests the first service to be provided.

S606: The proxy unit determines the second access network apparatus.

For example, after receiving the first request, the proxy unit may determine that the first service needs to be provided. Therefore, the proxy unit may determine, in at least one access network apparatus (for example, the second access network apparatus and a third access network apparatus) capable of communicating with the proxy unit, an access network apparatus that can provide data corresponding to the first service. The data corresponding to the first service may also be described as data related to the first service. First data is for implementing the first service. The first data may include input data for implementing the first service, an intermediate processing result of the input data for implementing the first service, and the like. For example, if the first service includes the sensing service, the first data may be measurement data of a sensing signal. The measurement data of the sensing signal is, for example, obtained from the terminal apparatus, and the measurement data of the sensing signal includes, for example, signal strength of the sensing signal and/or a directional angle of the sensing signal. For another example, if the first service includes the location service, the first data may be a measurement result of a positioning signal. The measurement result of the positioning signal is, for example, obtained from the terminal apparatus, and the measurement result of the positioning signal specifically includes, for example, signal strength of the positioning signal and/or an arrival moment of the positioning signal that is measured by the terminal apparatus. For another example, if the first service includes the AI service, the first data is, for example, input data of an AI model. The input data of the AI model may be obtained from the terminal apparatus. Specifically, for example, if the AI model is configured to predict channel information, the first data may be a reference signal, for example, a sounding reference signal (sounding reference signal, SRS). The AI model may also be described as a function (for example, an AI function or an ML (Machine learning) function), a feature, an algorithm (or an operator), or the like. The AI model may specifically include an AI model, an ML model, or the like.

In this embodiment of this application, an example in which the access network apparatus that can provide the data corresponding to the first service is the second access network apparatus is used.

In such an assumption, the proxy unit may determine, based on the information 2, that the second access network apparatus can support providing the data corresponding to the first service. In this case, the proxy unit may determine the second access network apparatus, which may also be understood as that the proxy unit determines that the second access network apparatus provides the data corresponding to the first service. When the information 2 includes the area restriction, before determining the second access network apparatus, the proxy unit may further determine that the area restriction of the second access network apparatus includes the target area.

In another possible implementation, the proxy unit can communicate with only the second access network apparatus. In this case, the proxy unit does not need to perform step S606. In other words, S606 is an optional step, and is shown by using a dashed line in FIG. 6.

S607: The proxy unit in the first access network apparatus outputs the first request to the second access network apparatus. Correspondingly, the second access network apparatus obtains the first request from the proxy unit. For content of the first request, refer to the content of the first request described above. Details are not enumerated herein again.

For example, the proxy unit in the first access network apparatus may output the first request to the communication unit in the second access network apparatus through a first interface. For content of the first interface, refer to the content of the first interface in FIG. 3. Details are not enumerated herein again.

In FIG. 6, an example in which the AF triggers the first service is used. That the AF triggers the first service may specifically include content of S605 to S607. That the AF triggers the first service may be applicable to a local service (or service). Actually, the first service may alternatively be triggered in a plurality of manners. When the first service is triggered in another manner, S605 to S607 are optional steps, and are shown by using dashed lines in FIG. 6.

S608: The second access network apparatus obtains the first data.

In a possible implementation, after the second access network apparatus obtains the first request, the second access network apparatus may determine a source apparatus configured to obtain the data corresponding to the first service, and request the source apparatus for obtaining the data corresponding to the first service from the source apparatus. In this embodiment of this application, an example in which the data corresponding to the first service includes the first data is used.

When source apparatuses are different, content of the first data obtained by the second access network apparatus is also different. The following separately provides descriptions.

A1: The source apparatus is the second access network apparatus. In A1, it is equivalent to that the second access network apparatus obtains the first data independently.

For example, the second access network apparatus may prestore the first data. Alternatively, the communication unit in the second access network apparatus may output a second request to the collection unit in the second access network apparatus, where the second request is for requesting the data corresponding to the first service. After receiving the second request, the collection unit in the second access network apparatus may collect the first data, and output the first data to the communication unit in the second access network apparatus. The first data may be collaboratively collected by the second access network apparatus and the terminal apparatus, or may be collaboratively collected by the second access network apparatus and the core network. This is not specifically limited in this embodiment of this application.

When the content of the first data is different, content in which the collection unit in the second access network apparatus collects the first data is also different. The following separately provides descriptions.

For example, when the first data includes a measurement result of a sensing signal, the collection unit in the second access network apparatus may output the sensing signal to the terminal apparatus, the terminal apparatus measures the sensing signal to obtain the measurement result of the sensing signal, and the terminal apparatus outputs the measurement result of the sensing signal to the collection unit in the second access network apparatus.

For another example, when the first data includes a measurement result of a positioning signal, the collection unit in the second access network apparatus may output the positioning signal to the terminal apparatus, the terminal apparatus measures the positioning signal to obtain the measurement result of the positioning signal, and the terminal apparatus outputs the measurement result of the positioning signal to the collection unit in the second access network apparatus.

For another example, when the first data includes input data of an AI, the collection unit in the second access network apparatus obtains the input data of the AI from the terminal apparatus, where the input data of the AI includes, for example, an SRS.

Certainly, the foregoing provides examples of the manners in which the collection unit in the second access network apparatus collects the first data. Actually, the second access network apparatus may collect the first data in a plurality of manners. This is not specifically limited in this embodiment of this application.

A2: The source apparatus is another core network apparatus (for example, a third access network apparatus). In A2, it is equivalent to that the second access network apparatus obtains the first data from the third access network apparatus.

For example, the second access network apparatus (specifically, for example, the communication unit in the second access network apparatus) may output a second request to the third access network apparatus. For a meaning of the second request, refer to the content of the second request in A1. After obtaining the second request, the third access network apparatus may collect the first data, and output the first data to the second access network apparatus. A communication unit in the third access network apparatus may output the first data to the communication unit in the second access network apparatus through an Xn interface. For a manner in which the third access network apparatus collects the first data, refer to the content in which the second access network apparatus collects the first data. Details are not enumerated herein again.

A3: The source apparatus is a core network. In A3, it is equivalent to that the second core network apparatus obtains the first data from the core network.

For example, the second access network apparatus (specifically, for example, the communication unit in the second access network apparatus) may output a second request to the core network. For a meaning of the second request, refer to the content of the second request in A1. After obtaining the second request, the core network may collect the first data, and output the first data to the second access network apparatus. The core network may prestore the first data, or the core network may collect the first data in the foregoing manner in which the second access network apparatus collects the first data. Details are not enumerated herein again.

In another possible case, after obtaining the first request, the second access network apparatus may directly collect the data corresponding to the first service, to obtain the first data. In this case, the second access network apparatus may not need to determine the source apparatus configured to obtain the data corresponding to the first service.

S609: The communication unit in the second access network apparatus outputs the first data to the proxy unit in the first access network apparatus. Correspondingly, the proxy unit obtains the first data from the communication unit in the second access network apparatus.

For example, the communication unit in the second access network apparatus may output the first data to the proxy unit in the first access network apparatus through a first interface. For content of the first interface, refer to the content of the first interface in FIG. 3. Details are not enumerated herein again.

S610: The proxy unit in the first access network apparatus outputs the first data to the first service unit in the first access network apparatus. Correspondingly, the first service unit obtains the first data from the proxy unit.

For example, the proxy unit in the first access network apparatus may output the first data to the first service unit in the first access network apparatus through the second interface. For the second interface, refer to the content in FIG. 3. Details are not enumerated herein again.

When a quantity of the at least one service unit in the first access network apparatus is more than one, before performing S610, the proxy unit may determine the first service unit in the plurality of service units.

The proxy unit may determine, based on the type information and/or the function information of the service that each service unit in the at least one service unit supports providing, a service unit that supports providing the first service. In this embodiment of this application, that the service unit supporting the first service is the first service unit is described.

Optionally, before sending the first data to the first service unit, the proxy unit may preprocess the first data. That the proxy unit sends the first data to the first service unit is actually sending preprocessed first data to the first service unit.

The proxy unit processes the first data in a plurality of manners. For example, the proxy unit may update a packet header corresponding to the first data, or discard the packet header corresponding to the first data, to obtain the preprocessed first data. For another example, the proxy unit may extract a part or all of data content in the first data, and use the part or all of the data content as the preprocessed first data. For another example, the proxy unit may change a format of the first data, and use the first data with a changed format as the preprocessed first data. Certainly, the first data is alternatively preprocessed in a plurality of manners. This is not specifically limited in this embodiment of this application.

S611: The first service unit in the first access network apparatus obtains a first result.

After receiving the first data, the first service unit may process the first data to obtain the first result. The first result may be a final result of implementing the first service, or may be an intermediate result of implementing the first service. If first services are different, corresponding first results may also be different. The following provides examples for description.

For example, the first service includes a sensing service. In this case, the first service unit may analyze the first data to determine target identification information and/or target detection information. The target identification information and/or the target detection information may be an example of the first result. A target may be the terminal apparatus, a person and/or an object associated with the terminal apparatus, or the like. For example, the target may be a person and/or an object whose distance from the terminal apparatus is less than or equal to a first distance. The target identification information may be determined by identifying a sensing signal, for example, includes type information of the target and/or location information of the target. The type information of the target indicates, for example, that a type of the terminal apparatus is a vehicle. The target detection information may be obtained by detecting the sensing signal, for example, includes the location information of the target, and/or the location information of the target and location information of the terminal apparatus.

For another example, the first service includes a location service. In this case, the first service unit may be referred to as a positioning data management unit.

For example, the proxy unit may output the first data (for example, a measurement result of a positioning signal) to the positioning data management unit, and the positioning data management unit may process the first data (for example, the measurement result of the positioning signal) to determine location information of the terminal apparatus. The location information of the terminal apparatus may be considered as an example of the first result.

Alternatively, to avoid privacy leakage of a terminal identity, an identity management unit may determine an identity (for example, a permanent identity) of the terminal apparatus corresponding to the first data (for example, the measurement result of the positioning signal). For example, the identity management unit may obtain the identity of the terminal apparatus from the proxy unit, or the identity of the terminal apparatus may be prestored or preconfigured in the identity management unit. The identity management unit may generate a temporary identifier of the terminal apparatus, associate the temporary identifier with the first data, and output the associated temporary identifier and the first data to the positioning data management unit. In this way, the first service unit determines the location information of the terminal apparatus. In the process, the positioning data management unit may sense only the temporary identifier of the terminal apparatus, thereby ensuring processing security.

For another example, the first service includes an AI service. In this case, the service unit may be an AI management unit, and is configured to perform AI model management, AI training data management, AI inference management, and other functions. Data obtained by the service unit from the proxy unit may be used as input data of the AI model. The AI management unit completes training of the AI model, to obtain a trained AI model. The trained AI model may be considered as an example of the first result. The AI management unit may alternatively update the AI model, to obtain an updated AI model. The updated AI model may be considered as an example of the first result. Optionally, the AI management unit may further perform AI inference based on the first data (in this case, the first data is, for example, the input data of the AI model), and obtain an inference result after completing inference based on the AI model. The inference result may be considered as an example of the first result. Optionally, the first service unit may transmit the first result to the second access network apparatus via the proxy unit. The second access network apparatus may use or output the first result. For example, the communication unit (for example, a CU) or the collection unit (for example, a DU) in the second access network apparatus may use the first result.

When the first service unit has a recording function, the first service unit may record context information of the first service unit, where the context information may indicate information about a process of providing the first service this time, for example, may include first data and the first result.

Alternatively, the proxy unit records the context information of the first service unit. This may be applicable to a case in which the first service unit does not have the recording function. Certainly, both the proxy unit and the first service unit may record the context information of the first service unit.

S612: The first service unit in the first access network apparatus outputs the first result to the proxy unit in the first access network apparatus. Correspondingly, the proxy unit obtains the first result from the first service unit.

For example, the first service unit may output the first result to the proxy unit through the second interface. For the content of the second interface, refer to the content of the second interface in FIG. 3.

S613: The proxy unit in the first access network apparatus outputs the first result to the AF. Correspondingly, the AF obtains the first result from the proxy unit.

For example, the proxy unit may output the first result to the AF through an API.

In another possible implementation, the first service unit may directly use the first result locally (this case may be referred to as a local closed-loop). This case may be applicable to a server, a mobile edge computing (mobile edge computing, MEC) server, or the like in which the first service is locally deployed. In this case, steps S612 and S613 do not need to be performed. In other words, S612 and S613 are optional steps, and are shown by using dashed lines in FIG. 6.

In this embodiment of this application, when a new function is to be added to the first access network apparatus, a corresponding service unit can be directly added to the first access network apparatus, without an overall upgrade of the first access network apparatus and the second access network apparatus, so that scalability of an architecture of the access network apparatus is improved, and difficulty in and costs of subsequently upgrading the first access network apparatus are reduced. In addition, the first access network apparatus and the second access network apparatus may collaboratively implement the first service without using the core network. This provides a mechanism of locally implementing the first service when the AF triggers the first service. Because the core network does not need to be used, a delay of implementing the first service is also reduced. Moreover, the AF may directly initiate the first request to the first access network apparatus without forwarding by another network element, so that a network transmission delay can be reduced, and efficiency of the first service can also be improved.

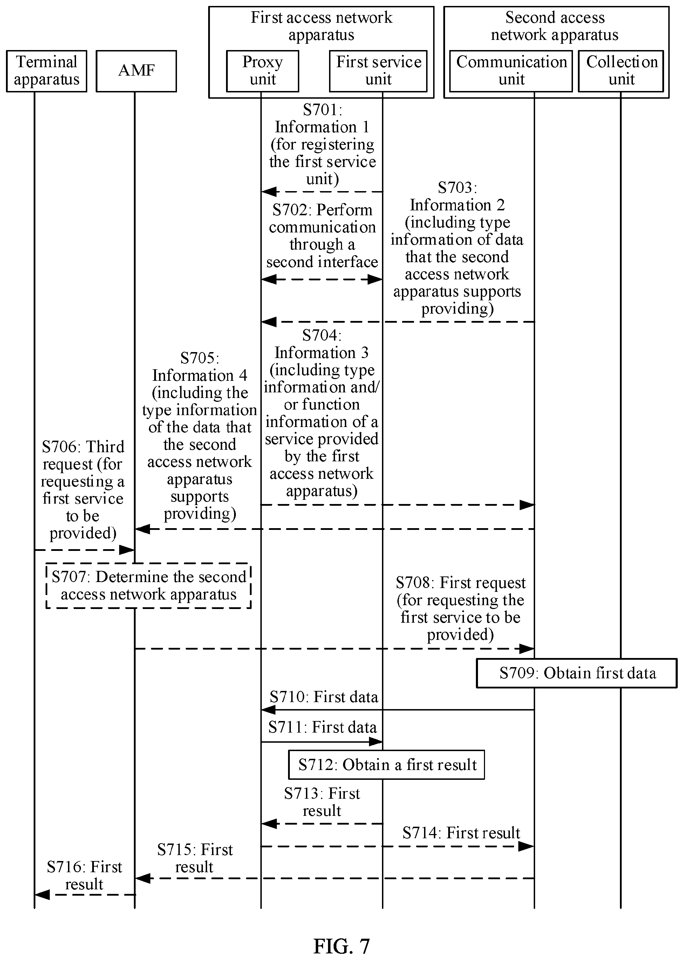

FIG. 6 is described by using an example in which the AF triggers the first service. In another possible implementation, the AMF may trigger the first service. With reference to a diagram of a communication method shown in FIG. 7, the following describes interaction between apparatuses when the AMF triggers the first service.

S701: A first service unit in a first access network apparatus outputs information 1 to a proxy unit in the first access network apparatus. Correspondingly, the proxy unit obtains the information 1 from the first service unit. The information 1 may be referred to as second information.

For content of the information 1, refer to the content of the information 1 in S601. For a manner in which the first service unit sends the information 1 to the proxy unit, refer to the content in which the first service unit sends the information 1 to the proxy unit in S601. Repeated content is not enumerated again.

S702: The proxy unit in the first access network apparatus communicates with the first service unit in the first access network apparatus through a second interface. For content of the second interface, refer to the content of the second interface in S601. Repeated content is not enumerated again.

S703: A second access network apparatus outputs information 2 to the proxy unit in the first access network apparatus. Correspondingly, the proxy unit obtains the information 2 from the second access network apparatus. The information 2 may be referred to as first information.

For content of the information 2, refer to the content in S603. For a manner in which the second access network apparatus outputs the information 2 to the proxy unit, refer to the content in which the second access network apparatus outputs the information 2 to the proxy unit in S603. Repeated content is not described again.

S704: The proxy unit in the first access network apparatus outputs information 3 to the second access network apparatus. Correspondingly, the second access network apparatus obtains the information 3 from the proxy unit. The information 3 may also be referred to as third information.

For content of the information 3, refer to the content in S604. For a manner in which the proxy unit outputs the information 3 to the second access network apparatus, refer to the content in which the proxy unit outputs the information 3 to the second access network apparatus in S604. Repeated content is not described again.

S705: The second access network apparatus outputs information 4 to the AMF. Correspondingly, the AMF obtains the information 4 from the second access network apparatus. The information 4 may also be referred to as fourth information. The information 4 may be considered as capability information of the second access network apparatus.

For example, a communication unit in the second access network apparatus may output the information 4 to the AMF through an N2 interface. The information 4 may indicate type information of data that the second access network apparatus supports providing. For content of the type information of the data that the second access network apparatus supports providing, refer to the content in S603. Optionally, the information 4 may further indicate type information and/or function information of a service provided by the first access network apparatus. For the type information and/or the function information of the service provided by the first access network apparatus, refer to the content in S604.

It should be understood that when the information 4 further indicates the type information and/or the function information of the service provided by the first access network apparatus, the AMF may not need to sense existence of the first access network apparatus. Alternatively, it may be understood that, for the AMF, the information 4 is considered as capability information of the first access network apparatus.

In a possible implementation, the AMF may further output capability information of the AMF to the second access network apparatus. Correspondingly, the second access network apparatus obtains the capability information of the AMF from the AMF. For example, the AMF may output the capability information of the AMF to the second access network apparatus through the N2 interface. The capability information of the AMF may indicate at least one of a type of a service that can be supported by the AMF, a type of data that can be supported by the AMF, a second area restriction, and the like. For content of the type of the service and the type of the data, refer to the content described above. For content of the second area restriction, refer to the content of the first area restriction described above. Details are not enumerated herein again.

It should be noted that the foregoing uses an example in which the AMF obtains the capability information of the second access network apparatus for description. Actually, the AMF may communicate with a plurality of access network apparatuses (for example, the second access network apparatus and a third access network apparatus). In this case, the AMF may obtain capability information corresponding to each access network apparatus in the plurality of access network apparatuses.

Alternatively, the AMF may not need the information 4, or the information 4 may be preconfigured or predefined on the AMF. In this case, steps S701 to S705 do not need to be performed. In other words, S701 to S705 are optional steps, and are shown by using dashed lines in FIG. 7.

S706: A terminal apparatus outputs a third request to the AMF. Correspondingly, the AMF obtains the third request from the terminal apparatus. The third request is for requesting the first service to be provided.

The third request may include type information and/or function information of the first service. Optionally, a first request further includes a KPI and/or a target area. For content of the type information of the first service, the function information of the first service, the KPI, and the target area, refer to the content of the type information of the first service, the function information of the first service, the KPI, and the target area in S605. Repeated content is not described again.

The AMF actively determines that the terminal apparatus needs the first service. In this case, step S706 may not need to be performed. In other words, S706 is an optional step, and is shown by using a dashed line in FIG. 7.

S707: The AMF determines the second access network apparatus.

Because both an access network apparatus and a core network may implement the first service, after receiving the third request, the AMF may determine whether the access network apparatus provides the first service or the core network provides the first service.

For example, if the AMF may determine, based on capability information of the plurality of access network apparatuses, that N access network apparatuses in the plurality of access network apparatuses can provide the first service, the AMF may determine that the access network apparatus provides the first service, where N is a positive integer. If the AMF determines that none of the plurality of access network apparatuses can provide the first service, the AMF may request a core network element (or a core network unit) that is in the core network and that can provide the first service to provide the first service.

In this embodiment of this application, that the AMF determines that the access network apparatus provides the first service is described. In this embodiment of this application, the second access network apparatus is used as an example. When N is 1, the AMF may determine that the access network apparatus that can provide the first service is the second access network apparatus. When N is greater than 1, it indicates that there may be a plurality of access network apparatuses that can provide the first service. In this case, the AMF may determine, in the N access network apparatuses, one access network apparatus configured to provide the first service. For example, the AMF may use an access network apparatus with a smallest load in the N access network apparatuses as the second access network apparatus, use an access network apparatus closest to the terminal apparatus in the N access network apparatuses as the second access network apparatus, or use an access network apparatus closest to the AMF in the N access network apparatuses as the second access network apparatus.

Alternatively, the AMF can communicate with only the second access network apparatus. In this case, the AMF may not need to perform step S707. In other words, step S707 is an optional step, and is shown by using a dashed line in FIG. 7.

S708: The AMF outputs a first request to the second access network apparatus. Correspondingly, the second access network apparatus obtains the first request from the AMF.

S706 to S708 are described by using an example in which the AMF triggers the first service. When the first service is triggered in another manner, steps S706 to S708 may not need to be performed. In other words, S706 to S708 are optional steps, and are shown by using dashed lines in FIG. 7.

For example, the AMF may output the first request to the communication unit in the second access network apparatus through the N2 interface. For content of the first request, refer to the content of the first request in S605. Details are not enumerated herein again.

It should be understood that, an example in which the AMF is triggered by the terminal apparatus to initiate the first request is used in S706. Actually, the AMF may alternatively be triggered by an AF via an NEF to initiate the first request, or triggered by another unit (for example, a data analysis unit) or the like in the core network to initiate the first request, or the AMF initiates the first request independently. This is not limited in this embodiment of this application. When the AMF obtains the third request from another apparatus or unit, S706 is an optional step, and is shown by using a dashed line in FIG. 7.

S709: The second access network apparatus obtains first data.

For content of the first data, refer to the content of the first data in S608. For a manner of obtaining the first data, refer to the content of obtaining the first data in S608. Repeated content is not enumerated again.

S710: The second access network apparatus outputs the first data to the proxy unit in the first access network apparatus. Correspondingly, the proxy unit obtains the first data from the second access network apparatus.

For a manner in which the second access network apparatus outputs the first data to the proxy unit in the first access network apparatus, refer to the content in which the second access network apparatus outputs the first data to the proxy unit in the first access network apparatus in S609. Repeated content is not described again.

S711: The proxy unit in the first access network apparatus outputs the first data to the first service unit in the first access network apparatus. Correspondingly, the first service unit obtains the first data from the proxy unit.

For a manner in which the proxy unit outputs the first data to the first service unit, refer to the content in which the proxy unit outputs the first data to the first service unit in S610. Repeated content is not described again.

Optionally, before outputting the first data to the first service unit, the proxy unit may further preprocess the first data to obtain preprocessed first data. The proxy unit actually sends the preprocessed first data to the first service unit. For content of the preprocessed first data, refer to the content of the preprocessed first data described above. Details are not enumerated herein again.

S712: The first service unit in the first access network apparatus obtains a first result.

For content of the first result, refer to the content of the first result in S611. For content in which the first service unit obtains the first result, refer to the content of obtaining the first result in S611. Repeated content is not enumerated again.

S713: The first service unit in the first access network apparatus outputs the first result to the proxy unit in the first access network apparatus. Correspondingly, the proxy unit obtains the first result from the first service unit.

For example, for content in which the first service unit outputs the first result to the proxy unit, refer to the content in which the first service unit outputs the first result to the proxy unit in S612. Repeated content is not described again.

S714: The proxy unit in the first access network apparatus outputs the first result to the second access network apparatus. Correspondingly, the second access network apparatus obtains the first result from the proxy unit.

For example, the proxy unit in the first access network apparatus may output the first result to the communication unit in the second access network apparatus through the second interface. For the second interface, refer to the content of the second interface in FIG. 3. Details are not described herein again.

S715: The second access network apparatus outputs the first result to the AMF. Correspondingly, the AMF obtains the first result from the second access network apparatus.

For example, the communication unit in the second access network apparatus outputs the first result to the AMF through the N2 interface.

S716: The AMF outputs the first result to the terminal apparatus. Correspondingly, the terminal apparatus obtains the first result from the AMF.

For example, the AMF may output the first result to the terminal apparatus through an N1 interface. Optionally, the AMF may include the first result in a non-access stratum (non-access stratum, NAS) message, and the AMF may output the NAS message to the terminal apparatus, which is equivalent to outputting the first result.

In another possible implementation, the first service unit may alternatively use the first result locally. In this case, steps S713 to S716 may not need to be performed, and are shown by using dashed lines in FIG. 7.

In this embodiment of this application, an architecture of the access network apparatus has high scalability. In addition, the terminal apparatus may initiate the first request via the AMF, and may be compatible with an existing service trigger mechanism, so that compatibility of the method provided in this embodiment of this application is good. Moreover, in this embodiment of this application, the first access network apparatus and the second access network apparatus may also collaboratively provide the first service, to provide a mechanism of locally providing the first service when the AMF triggers the first service.

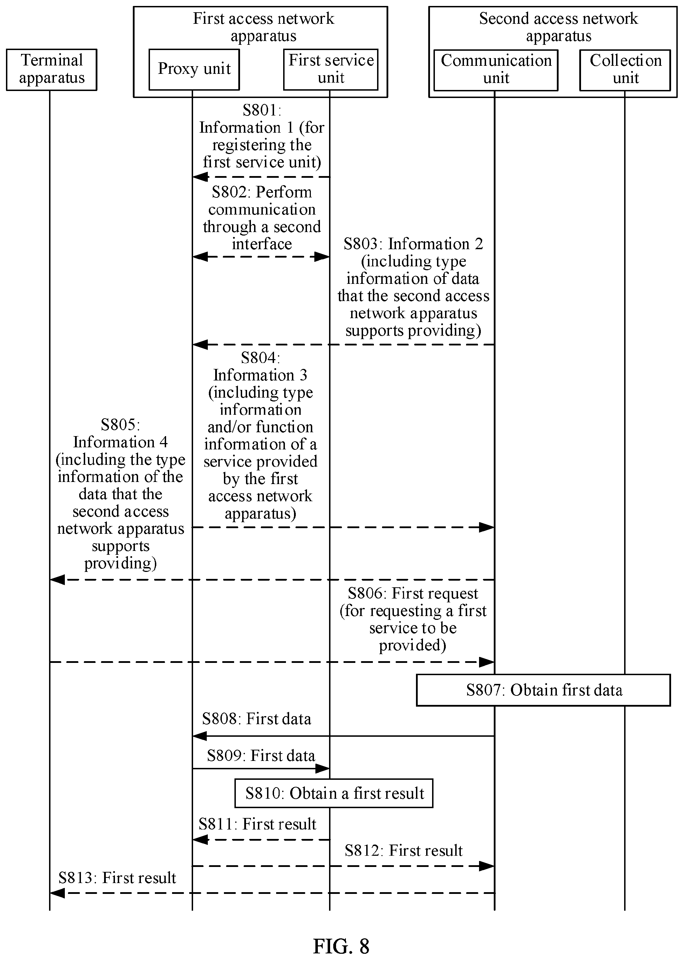

FIG. 7 is described by using an example in which the AMF triggers the first service. In another possible implementation, the terminal apparatus may directly trigger the first service. With reference to a diagram of a communication method shown in FIG. 8, the following describes interaction between apparatuses when the terminal apparatus directly triggers the first service.

S801: A first service unit in a first access network apparatus sends information 1 to a proxy unit in the first access network apparatus. Correspondingly, the proxy unit obtains the information 1 from the first service unit. The information 1 may be referred to as second information.

For content of the information 1, refer to the content of the information 1 in S601. For a manner in which the first service unit sends the information 1 to the proxy unit, refer to the content in which the first service unit sends the information 1 to the proxy unit in S601. Repeated content is not enumerated again.

S802: The proxy unit in the first access network apparatus communicates with the first service unit in the first access network apparatus through a second interface. For content of the second interface, refer to the content in S601. Repeated content is not enumerated again.

S803: A second access network apparatus outputs information 2 to the proxy unit in the first access network apparatus. Correspondingly, the proxy unit obtains the information 2 from the second access network apparatus. The information 2 may be referred to as first information.

For content of the information 2, refer to the content in S603. For a manner in which the second access network apparatus outputs the information 2 to the proxy unit, refer to the content in which the second access network apparatus outputs the information 2 to the proxy unit in S603. Repeated content is not described again.

S804: The proxy unit in the first access network apparatus outputs information 3 to the second access network apparatus. Correspondingly, the second access network apparatus obtains the information 3 from the proxy unit. The information 3 may also be referred to as third information.

For content of the information 3, refer to the content in S604. For a manner in which the proxy unit outputs the information 3 to the second access network apparatus, refer to the content in which the proxy unit outputs the information 3 to the second access network apparatus in S604. Repeated content is not described again.

S805: The second access network apparatus sends information 4. The information 4 may also be referred to as fourth information. The information 4 may be considered as capability information of the second access network apparatus.

For example, the second access network apparatus may broadcast the information 4. In this embodiment of this application, an example in which the terminal apparatus receives the information 4 is used for description. Alternatively, the second access network apparatus may directly output the information 4 to the terminal apparatus. For content of the information 4, refer to the content of the information 4 in S704. Repeated content is not listed again.

It should be understood that when the information 4 further indicates type information and/or function information of a service provided by the first access network apparatus, the terminal apparatus may not need to sense existence of the first access network apparatus. Alternatively, it may be understood that, for the terminal apparatus, the information 4 is considered as capability information of the first access network apparatus.

In a possible implementation, the terminal apparatus may further output capability information of the terminal apparatus to the second access network apparatus. Correspondingly, the second access network apparatus obtains the capability information of the terminal apparatus from the terminal apparatus. For example, the terminal apparatus may output the capability information of the terminal apparatus to a communication unit in the second access network apparatus. The capability information of the terminal apparatus may indicate a type of a service supported by the terminal apparatus. For the type of the service, refer to the content described above.

It should be noted that the foregoing uses an example in which the terminal apparatus obtains the capability information of the second access network apparatus for description. Actually, the terminal apparatus may communicate with a plurality of access network apparatuses (for example, the second access network apparatus and a third access network apparatus). In this case, the terminal apparatus may obtain capability information corresponding to each access network apparatus in the plurality of access network apparatuses.

In this case, before triggering a first request, the terminal apparatus may determine, in the plurality of access network apparatuses, an access network apparatus configured to provide the first service. In this embodiment of this application, an example in which the second access network apparatus provides the first service is used. For content in which the terminal apparatus determines the access network apparatus configured to provide the first service, refer to the content in which the AMF determines the access network apparatus providing the first service. Repeated content is not described again.

The terminal apparatus may alternatively obtain the information 4 in another manner. For example, the terminal apparatus may obtain the information 4 via an AMF or the like. In this case, steps S801 to S805 may not need to be performed. In other words, S801 to S805 are optional steps, and are shown by using dashed lines in FIG. 8.

S806: The terminal apparatus outputs a first request to the second access network apparatus. Correspondingly, the second access network apparatus obtains the first request from the terminal apparatus.

For content of the first request, refer to the content of the first request in S605. Details are not enumerated herein again.

S807: The second access network apparatus obtains first data.

For content of the first data, refer to the content of the first data in S608. For a manner of obtaining the first data, refer to the content of obtaining the first data in S608. Repeated content is not enumerated again.

S808: The second access network apparatus outputs the first data to the proxy unit in the first access network apparatus. Correspondingly, the proxy unit obtains the first data from the second access network apparatus.

For a manner in which the second access network apparatus outputs the first data to the proxy unit in the first access network apparatus, refer to the content in which the second access network apparatus outputs the first data to the proxy unit in the first access network apparatus in S609. Repeated content is not described again.

S809: The proxy unit in the first access network apparatus outputs the first data to the first service unit in the first access network apparatus. Correspondingly, the first service unit obtains the first data from the proxy unit.

For a manner in which the proxy unit outputs the first data to the first service unit, refer to the content in which the proxy unit outputs the first data to the first service unit in S610. Repeated content is not described again.

Optionally, before outputting the first data to the first service unit, the proxy unit may further preprocess the first data to obtain preprocessed first data. The proxy unit actually sends the preprocessed first data to the first service unit. For content of the preprocessed first data, refer to the content of the preprocessed first data described above. Details are not enumerated herein again.

S810: The first service unit in the first access network apparatus obtains a first result.

For content of the first result, refer to the content of the first result in S611. For content in which the first service unit obtains the first result, refer to the content of obtaining the first result in S611. Repeated content is not enumerated again.

S811: The first service unit in the first access network apparatus outputs the first result to the proxy unit in the first access network apparatus. Correspondingly, the proxy unit obtains the first result from the first service unit.

For example, for content in which the first service unit outputs the first result to the proxy unit, refer to the content in which the first service unit outputs the first result to the proxy unit in S612. Repeated content is not described again.

S812: The proxy unit in the first access network apparatus outputs the first result to the second access network apparatus. Correspondingly, the second access network apparatus obtains the first result from the proxy unit.

For example, the proxy unit in the first access network apparatus may output the first result to the communication unit in the second access network apparatus through the second interface. For the second interface, refer to the content of the second interface in FIG. 3. Details are not described herein again.

S813: The second access network apparatus outputs the first result to the terminal apparatus. Correspondingly, the terminal apparatus obtains the first result from the second access network apparatus.

For example, the communication unit in the second access network apparatus outputs the first result to the terminal apparatus.

In another possible implementation, the first service unit may alternatively use the first result locally. In this case, steps S812 and S813 may not need to be performed. In other words, S812 and S813 are optional steps, and are shown by using dashed lines in FIG. 8.

In this embodiment of this application, an architecture of the access network apparatus has high scalability. In addition, the terminal apparatus may directly initiate the first request to the second access network apparatus, thereby simplifying a processing procedure in which the terminal apparatus initiates a service, and improving efficiency of providing the first service. Moreover, in this embodiment of this application, the first access network apparatus and the second access network apparatus may collaboratively provide the first service, to provide a mechanism of locally providing the first service when the terminal apparatus triggers the first service.

It should be understood that in the foregoing embodiments, an example in which the AF, the terminal apparatus, or the AMF triggers the first service is used. Actually, the first service may alternatively be triggered in a plurality of manners. This is not specifically limited in embodiments of this application.

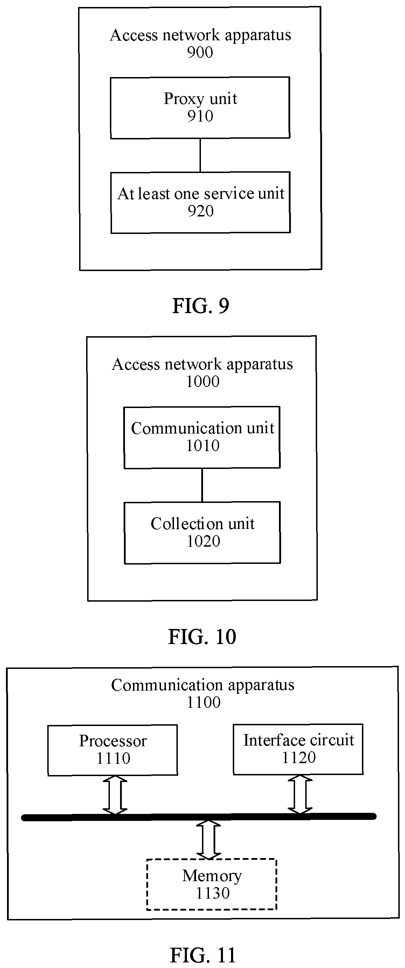

FIG. 9 is a diagram of an architecture of an access communication apparatus according to an embodiment of this application.

As shown in FIG. 9, an access network apparatus 900 includes a proxy unit 910 and at least one service unit 920. The access network apparatus 900 may be, for example, the first access network apparatus shown in FIG. 2, FIG. 3, or FIG. 5.

In this embodiment of this application, the access network apparatus 900 may implement a function of the first access network apparatus in any one of FIG. 6 to FIG. 8, and correspondingly, may also implement a corresponding step performed by the first access network apparatus. Correspondingly, the proxy unit 910 may also implement a function of the proxy unit in any one of FIG. 6 to FIG. 8, and may also implement a corresponding step performed by the proxy unit; and the at least one service unit 920 may also implement a function of the at least one service unit in any one of FIG. 6 to FIG. 8, and may also implement a corresponding step performed by the at least one service unit.

For example, when the access network apparatus 900 implements the function of the first access network apparatus in any one of FIG. 6 to FIG. 8, the proxy unit 910 is configured to obtain first data from a second access network apparatus, and output the first data to a first service unit in the at least one service unit 920; and the first service unit is configured to process the first data to obtain a first result.

Optionally, the proxy unit 910 may be further configured to determine the second access network apparatus, obtain information 1 and a first result, output information 3 and the first result, and the like; and the first service unit may be further configured to output the first result.

For more detailed descriptions of the proxy unit 910 and the at least one service unit 920, directly refer to related descriptions in the method embodiment in any one of FIG. 6 to FIG. 8. Details are not described herein again.

FIG. 10 is a diagram of an architecture of an access communication apparatus according to an embodiment of this application.

As shown in FIG. 10, an access network apparatus 1000 includes a communication unit 1010 and a collection unit 1020. The access network apparatus 1000 may be, for example, the second access network apparatus shown in FIG. 2 to FIG. 5.

In this embodiment of this application, the access network apparatus 1000 may implement a function of the second access network apparatus in any one of FIG. 6 to FIG. 8, and correspondingly, may also implement a corresponding step performed by the second access network apparatus. Correspondingly, the communication unit 1010 may also implement a function of a communication unit in the second access network apparatus in any one of FIG. 6 to FIG. 8, and may also implement a corresponding step performed by the communication unit in the second access network apparatus; and the collection unit 1020 may also implement a function of a collection unit in any one of FIG. 6 to FIG. 8, and may also implement a corresponding step performed by the collection unit.

For example, when the access network apparatus 1000 implements the function of the second access network apparatus in FIG. 6, the communication unit 1010 may be configured to obtain first data and output the first data. Optionally, the collection unit 1020 may collect the first data; and the communication unit 1010 may be configured to obtain information 3 and a first request, and the like.

For another example, when the access network apparatus 1000 implements the function of the second access network apparatus in FIG. 7 or FIG. 8, the communication unit 1010 may be configured to obtain first data and output the first data. Optionally, the collection unit 1020 may collect the first data; and the communication unit 1010 may be configured to obtain information 3 and a first request, output information 4, and the like.

For more detailed descriptions of the communication unit 1010 and the collection unit 1020, directly refer to related descriptions in the method embodiment in any one of FIG. 6 to FIG. 8. Details are not described herein again.

An embodiment of this application provides an access network system. The system includes a first access network apparatus and a second access network apparatus. The first access network apparatus may be, for example, the first access network apparatus shown in FIG. 2, FIG. 3, FIG. 5, or FIG. 9, and the second access network apparatus may be, for example, FIG. 2, FIG. 3, FIG. 4, FIG. 5, or FIG. 10. In addition, the first access network apparatus may implement a function of the first access network apparatus in any one of FIG. 6 to FIG. 8, and the second access network apparatus may implement a function of the second access network apparatus in any one of FIG. 6 to FIG. 8.

FIG. 11 is a diagram of a structure of a communication apparatus according to an embodiment of this application. As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions executed by the processor 1110, input data required by the processor 1110 to run the instructions, or data generated after the processor 1110 runs the instructions.

Optionally, the processor 1110, the interface circuit 1120, and the memory 1130 may all be connected through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 11, but this does not mean that there is only one bus or only one type of bus. The bus may include a path for transmitting information between components (for example, the processor 1110, the interface circuit 1120, and the memory 1130) of the communication apparatus.

In a first embodiment, the communication apparatus 1100 may be configured to implement a function of any first access network apparatus described above, for example, may implement a function of the first access network apparatus shown in FIG. 2, FIG. 3, FIG. 5, or FIG. 9, and may further implement a function of the first access network apparatus shown in any one of FIG. 6 to FIG. 8.

In a second embodiment, the communication apparatus 1100 may be configured to implement a function of any second access network apparatus described above, for example, may implement a function of the second access network apparatus shown in FIG. 2, FIG. 3, FIG. 4, FIG. 5, or FIG. 10, and may further implement a function of the second access network apparatus shown in any one of FIG. 6 to FIG. 8.

In a third embodiment, the communication apparatus 1100 may be configured to implement a function of any AF described above, for example, may implement a function of the application function unit shown in FIG. 5, and may further implement a function of the AMF shown in FIG. 6.

In a fourth embodiment, the communication apparatus 1100 may be configured to implement a function of any AMF described above, for example, may implement a function of the mobility management unit shown in FIG. 5, and may further implement a function of the AMF shown in FIG. 7.

In a fifth embodiment, the communication apparatus 1100 may be configured to implement a function of any terminal apparatus described above, for example, may implement a function of the terminal apparatus shown in FIG. 2, FIG. 3, or FIG. 5, and may further implement a function of the terminal apparatus shown in FIG. 8.

When the communication apparatus is a chip used in a terminal, the chip in the terminal implements a function of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

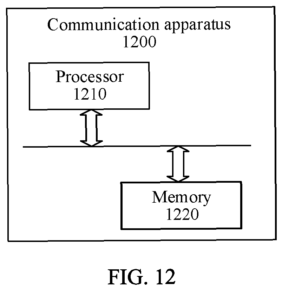

An embodiment of this application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. An example in which the communication apparatus includes one processor and one memory is used. FIG. 12 is a diagram of a structure of a communication apparatus. A communication apparatus 1200 includes one processor 1210 and one memory 1220. The processor 1210 is coupled to the memory 1220. The memory 1220 stores instructions. When the instructions stored in the memory 1220 are executed by the processor 1210, the communication apparatus 1200 performs the method performed by the first access network apparatus or the method performed by the second access network apparatus in the foregoing embodiments. Optionally, the processor 1210 and the memory 1220 may also be connected through a bus. For an implementation of the bus, refer to an implementation of the bus in FIG. 11.

It may be understood that the processor in embodiments of this application may be a central processing unit (central processing unit, CPU), or may be another general-purpose processor, a digital signal processor (digital signal processor, DSP), an application-specific integrated circuit (Application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor. The memory in embodiments of this application may include a volatile memory (volatile memory), for example, a random access memory (random access memory, RAM). The memory may further include a nonvolatile memory (nonvolatile memory), for example, a read-only memory (read-only memory, ROM), a flash memory, a hard disk drive (hard disk drive, HDD), or a solid-state drive (solid-state drive, SSD).

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in a base station or a terminal. The processor and the storage medium may alternatively exist in a base station or a terminal as discrete components.

All or some of the foregoing embodiments may be implemented by using software, hardware, firmware, or any combination thereof. When software is used to implement the technical solutions, all or a part of the technical solutions may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

An embodiment of this application provides a chip system. The chip system includes a processor and an interface. The processor is configured to invoke interfaces from the interface and run the instructions. When the processor executes the instructions, any one of the foregoing communication methods, for example, the communication method in any one of FIG. 6 to FIG. 8, is implemented.

An embodiment of this application provides a computer-readable storage medium. The computer-readable storage medium is configured to store a computer program or instructions. When the computer program or the instructions are run, any one of the foregoing communication methods, for example, the communication method in any one of FIG. 6 to FIG. 8, is implemented.

An embodiment of this application provides a computer program product including instructions. When the computer program product runs on a computer, any one of the foregoing communication methods, for example, the communication method in any one of FIG. 6 to FIG. 8, is implemented.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

## Claims

1. An access network apparatus, comprising a proxy unit and at least one service unit capable of communicating with the proxy unit, wherein the proxy unit is an entry for an external user/device to access the at least one service unit, and the at least one service unit is configured to provide a service of an access network side, wherein
the proxy unit is configured to obtain first data, and output the first data to a first service unit in the at least one service unit, wherein the first data is obtained from a second access network apparatus, the first data comprises data corresponding to a first service, and the first service unit is configured to provide the first service; and
the first service unit is configured to process the first data to obtain a first result.

2. The apparatus according to claim 1, wherein the proxy unit communicates with the second access network apparatus through a first interface, the first interface is used for transmission of data and/or signaling, and the first interface is a universal interface.

3. The apparatus according to claim 1, wherein the first service unit is further configured to:
output the first data to the proxy unit.

4. The apparatus according to claim 3, wherein the proxy unit is further configured to:
obtain a first request, wherein the first request is obtained from an application function unit, and is for requesting the first service to be provided;
output the first request, wherein the first request is used by the second access network apparatus to obtain the data corresponding to the first service; and
output the first result, wherein the first result is for being output to the application function unit.

5. The apparatus according to claim 4, wherein the proxy unit is further configured to:
obtain first information, wherein the first information is obtained from the second access network apparatus, and the first information comprises type information of data that the second access network apparatus supports providing; and
determine, based on the first information, the second access network apparatus in at least one access network apparatus communicating with the proxy unit.

6. The apparatus according to claim 4 or 5, wherein the first request is obtained from the application function unit through an application programming interface.

7. The apparatus according to any one of claims 1 to 6, wherein the proxy unit is further configured to:
obtain second information from the first service unit, wherein the second information is for registering the first service unit and indicates type information and/or function information of a service that the first service unit supports providing, and the service that the first service unit supports providing comprises the first service.

8. The apparatus according to claim 7, wherein the second information is further for configuring a second interface for communication between the first service unit and the proxy service; and the proxy unit is further configured to:
establish communication with the first service unit through the second interface.

9. The apparatus according to claim 8, wherein the first service unit is further configured to:
write information about the first service unit into an interface configuration template, to obtain the second information, wherein the information about the first service unit comprises the type information and/or the function information of the service provided by the first service unit, and the interface configuration template comprises common information for configuring an interface for the at least one service unit.

10. The apparatus according to any one of claims 1 to 9, wherein the proxy unit is further configured to:
output third information, wherein the third information comprises type information and/or function information of a service that the at least one service unit supports providing, and the third information is used by the second access network apparatus to determine the first access network apparatus.

11. The apparatus according to any one of claims 1 to 10, wherein both the access network apparatus and the second access network apparatus are disposed in a same device.

12. The apparatus according to any one of claims 1 to 11, wherein the first service comprises a sensing service, a location service, or an artificial intelligence service.

13. A communication method, applied to a first access network apparatus, wherein the method comprises:
obtaining first data, wherein the first data is obtained from a second access network apparatus, and the first data comprises data corresponding to a first service; and
processing the first data to obtain a first result.

14. The method according to claim 13, wherein the method further comprises:
outputting the first result to the second access network apparatus.

15. The method according to claim 13, wherein the method further comprises:
obtaining a first request, wherein the first request is obtained from an application function unit, and is for requesting the first service to be provided;
outputting the first request, wherein the first request is used by the second access network apparatus to obtain the data corresponding to the first service; and
outputting the first result, wherein the first result is output to the application function unit.

16. The method according to claim 15, wherein the method further comprises:
obtaining first information, wherein the first information is obtained from the second access network apparatus, and the first information comprises type information of data that the second access network apparatus supports providing; and
determining, based on the first information, the second access network apparatus in at least one access network apparatus communicating with the first access network apparatus.

17. The method according to any one of claims 13 to 16, wherein the first access network apparatus comprises a proxy unit and at least one service unit capable of communicating with the proxy unit, the proxy unit is an entry for an external user/device to access the at least one service unit, and the at least one service unit is configured to provide a service of an access network side, wherein the first data is obtained by the proxy unit from the second access network apparatus; and the method further comprises:
outputting, by the proxy unit, the first data to a first service unit in the at least one service unit, wherein the first service unit is configured to provide the first service; and
processing, by the first service unit, the first data to obtain the first result.

18. The method according to claim 17, wherein the method further comprises:
outputting the first result to the proxy unit.

19. The method according to claim 17 or 18, wherein the method further comprises:
obtaining second information from the first service unit, wherein
the second information is for registering the first service unit and indicates type information of a service that the first service unit supports providing, and the service provided by the first service unit comprises the first service.

20. The method according to claim 19, wherein the second information is further for configuring a second interface for communication between the first service unit and the proxy service; and the method further comprises:
establishing, by the proxy unit, communication with the first service unit through the second interface.

21. The method according to claim 20, wherein the method further comprises:
writing, by the first service unit, information about the first service unit into an interface configuration template, to obtain the second information, wherein the information about the first service unit comprises the type information and/or function information of the service provided by the first service unit, and the interface configuration template comprises common information for configuring an interface for the at least one service unit.

22. The method according to any one of claims 13 to 21, wherein the method further comprises:
outputting third information, wherein the third information is output to the second access network apparatus, and the third information comprises type information and/or function information of a service that the first access network apparatus supports providing.

23. A communication method, applied to a second access network apparatus, wherein the method comprises:
obtaining a first request, wherein the first request is for requesting a first service to be provided; and
outputting first data, wherein the first data is output to a first access network apparatus, and the first data comprises data corresponding to the first service.

24. The method according to claim 23, wherein the method further comprises:
outputting first information, wherein the first information is output to the first access network apparatus, and the first information comprises type information of data that the second access network apparatus supports providing.

25. The method according to claim 23 or 24, wherein the first request is obtained from a terminal apparatus or a mobility management unit; and the method further comprises:
obtaining a first result, wherein the first result is obtained from the first access network apparatus, and the first result is a processing result of the first data; and
outputting the first result, wherein the first result is output to the terminal apparatus or the mobility management unit.

26. The method according to any one of claims 23 to 25, wherein the first request is received from the terminal apparatus or the mobility management unit; and the method further comprises:
outputting fourth information, wherein the fourth information is output to the terminal apparatus or the mobility management unit, and the fourth information comprises the type information of the data that the second access network apparatus supports providing.

27. The method according to claim 26, wherein the method further comprises:
obtaining third information, wherein the third information is obtained from the first access network apparatus, the third information comprises type information and/or function information of a service that the first access network apparatus supports providing, and the fourth information further comprises the type information and/or the function information of the service provided by the first access network apparatus.

28. The method according to any one of claims 23 to 27, wherein the second access network apparatus comprises a communication unit and a collection unit, and the first request is obtained by the communication unit; and the method further comprises:
outputting, by the communication unit, a second request, wherein the second request is output to the collection unit, a third access network apparatus, or a core network, and the second request is for requesting the data corresponding to the first service; and
obtaining the first data, wherein the first data is obtained from the collection unit, the third access network apparatus, or the core network.

29. The method according to claim 28, wherein the method further comprises:
determining to obtain the data corresponding to the first service from the collection unit, the third access network apparatus, or the core network.

30. An access network apparatus, comprising a module configured to implement the method according to any one of claims 23 to 29.

31. An access network system, comprising the apparatus according to any one of claims 1 to 12 and the apparatus according to claim 30.

32. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 13 to 22 or implement the method according to any one of claims 23 to 29 through a logic circuit or by executing code instructions.

33. A communication apparatus, comprising a processor, wherein the processor is coupled to a memory, the memory is configured to store instructions, and when the instructions are executed by the processor, the communication apparatus is caused to implement the method according to any one of claims 13 to 22, or implement the method according to any one of claims 23 to 29.

34. A computer-readable storage medium, wherein the storage medium stores a computer program or instructions, and when the computer program or the instructions are executed by a communication apparatus, the method according to any one of claims 13 to 22 is implemented, or the method according to any one of claims 23 to 29 is implemented.
